# EUROPÄISCHE PATENTSCHRIFT

(11) **EP 3 439 848 B1**
(45) Veröffentlichungstag und Bekanntmachung des Hinweises auf die Patenterteilung: **09.10.2024**
(21) Anmeldenummer: 17705820.3
(22) Anmeldetag: 09.02.2017
(51) Int. Cl.: B29C 48/08, B29C 48/10, B29C 48/00, B29C 48/92, B29C 48/28

(54) **VERFAHREN ZUR BEWERTUNG MINDESTENS EINES INDUSTRIELLEN PROZESSES**
METHOD FOR EVALUATING AT LEAST ONE INDUSTRIAL PROCESS
PROCÉDÉ POUR ÉVALUER AU MOINS UN PROCESSUS INDUSTRIEL

(30) Priorität: 08.04.2016 DE 102016106523; 07.10.2016 DE 102016119110
(43) Veröffentlichungstag der Anmeldung: 13.02.2019
(73) Patentinhaber: Windmöller & Hölscher KG, 49525 Lengerich (DE)
(72) Erfinder: SCHMITZ, Torsten, 48268 Greven (DE)
(86) Internationale Anmeldenummer: PCT/EP2017/052830
(87) Internationale Veröffentlichungsnummer: WO 2017/174232

(56) Entgegenhaltungen:
- EP-A2- 2 514 580
- WO-A1-2013/185120
- WO-A2-2010/047811
- DE-A1- 102011 118 609
- JENS SPIRGATIS ET AL: "Online-Messsysteme garantieren ein hohes Qualitätsniveau in der Produktion: Optische Qualität von Folien messen", KUNSTSTOFFE, vol. 91, no. 5, 31 May 2001 (2001-05-31), München, pages 34 - 39, XP055365562

## Beschreibung

Die vorliegende Erfindung betrifft ein Verfahren gemäß der im Oberbegriff des Anspruchs 1 näher definierten Art. Ferner bezieht sich die Erfindung auf ein System, eine Verarbeitungsvorrichtung sowie ein Computerprogrammprodukt.

Es ist aus dem Stand der Technik bekannt, dass bei einem Prozess zur Folienherstellung bei den hierbei eingesetzten Herstellungsvorrichtungen, bspw. zur Herstellung von Gieß- oder Blasfolie, zur Qualitätssicherung stichprobenartig Muster entnommen werden. Diese Muster werden anschließend untersucht, z. B. mittels einer Zugprüfung oder eines Durchstoßtestes. Auch werden Untersuchungen durchgeführt, welche bereits den realen Bedingungen einer Weiterverarbeitung mit der Folie (bei Weiterverarbeitungsvorrichtungen wie Wickel-Stretch-Automaten) angenähert sind. Das Ergebnis dieser Prüfung kann bspw. zur Bewertung der Herstellung (bzw. der Folie als Produkt der Folienherstellung) dienen oder hat auch Einfluss auf Prozessparameter auf der Anwendungsseite (d. h. bei der Weiterverarbeitung mit der Folie).

Aus der DE 10 2011 118 609 sind eine Vorrichtung und ein Verfahren zum unmittelbaren Bedrucken bahnförmiger Materialien, bereits während ihres Herstellungsprozesses durch Inline-Druckvorrichtungen bekannt.

Zudem ist aus der EP 2 514 580 A2 ein Verfahren zur Regelung des Foliendickenprofils von in Folienblasanlagen hergestellten ein- oder mehrschichtigen Schlauchfolien durch erfassen des Dickenprofils des Folienschlauches, anschließendem Vergleich des erfassten Istprofils mit den vorgegebenen Sollprofilen, zur Erzeugung einer Regelgröße zum Beeinflussen des Dickenprofils des herzustellenden Folienschlauchs bekannt.

Die WO 2010/047811 A2 offenbart zudem ein Verfahren und Formungssystem zum Formen eines Kunststoffartikels durch drahtlose Steuerung. Das Formsystem umfasst dabei eine primäre Steuerung, die in drahtlose Kommunikation mit der Schlittensteuerung eines oder mehrerer selbstfahrender Schlitten treten kann.

Allerdings sind oft die daraus resultierenden Bewertungen nicht optimal oder lassen sich nur stichpunktartig und/oder ungenügend für die Anwendungsseite nutzen. Ferner sind die Untersuchungen aufwendig und mit hohen Kosten verbunden. Des Weiteren ist es oft nicht möglich, schnell und einfach die Prozessparameter bei der Folienherstellung und Weiterverarbeitung zu optimieren.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte Bewertung mindestens eines industriellen Prozesses zur Folienherstellung einer Folie und/oder Weiterverarbeitung mit der Folie zu ermöglichen. Weiter soll insbesondere die Bewertung und/oder eine Optimierung der Folienherstellung und/oder Weiterverarbeitung schneller, zuverlässiger und/oder kostengünstiger erfolgen.

Ferner soll insbesondere die Prozesssicherheit und/oder Prozessstabilität verbessert werden.

Die voranstehende Aufgabe wird gelöst durch ein Verfahren mit den Merkmalen des Anspruchs 1, ein System mit den Merkmalen des Anspruchs 17, eine Verarbeitungsvorrichtung mit den Merkmalen des Anspruchs 27 sowie durch ein Computerprogrammprodukt mit den Merkmalen des Anspruchs 29. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System, der erfindungsgemäßen Verarbeitungsvorrichtung sowie dem erfindungsgemäßen Computerprogrammprodukt, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Verfahren zur Bewertung mindestens eines industriellen Prozesses zur Folienherstellung einer Folie und/oder Weiterverarbeitung mit der Folie. Die Weiterverarbeitung mit der Folie umfasst dabei z. B. auch eine Weiterverarbeitung der Folie selbst oder eine Weiterverarbeitung anderer Produkte, wobei die Folie hierbei zum Einsatz kommt, z. B. als Verpackungsmaterial.

Erfindungsgemäß ist dabei wenigstens eine Herstellungsvorrichtung, welche zur Folienherstellung der Folie betrieben wird, und wenigstens eine Weiterverarbeitungsvorrichtung, welche zur Weiterverarbeitung mit der Folie betrieben wird, vorgesehen. Die Herstellungsvorrichtung ist unabhängig und räumlich getrennt von der Weiterverarbeitungsvorrichtung angeordnet, insbesondere an einem anderen geographischen Standort, z. B. über mindestens 10 m oder mindestens 100 m oder mindestens 1000 m oder mindestens 100 km entfernt, sodass insbesondere die Folienherstellung und Weiterverarbeitung als (zwei separate und/oder zeitlich auseinanderliegende) Teilprozesse eines standortübergreifenden (Gesamt-) Prozesses angesehen werden können. Der erste Teilprozess umfasst dabei z. B. die Herstellung von einer oder mehreren Folien durch die Herstellungsvorrichtung und der zweite Teilprozess umfasst z. B. die Weiterverarbeitung dieser Folien durch die Weiterverarbeitungsvorrichtung. Dabei können vorzugsweise für den ersten Teilprozess (die Folienherstellung) auch mehrere Herstellungsvorrichtungen vorgesehen sein, welche miteinander zusammenwirken, um ein erstes Teilprozessprodukt (z. B. die Folie) herzustellen. Ebenso können vorzugsweise für den zweiten Teilprozess (die Weiterverarbeitung) auch mehrere Weiterverarbeitungsvorrichtungen vorgesehen sein, welche miteinander zusammenwirken, um ein zweites Teilprozessprodukt (z. B. ein mit der Folie verpacktes Produkt und/oder eine bedruckte Folie) insbesondere als (Gesamt) Prozessprodukt zu erstellen.

Es ist erfindungsgemäß vorgesehen, dass die nachfolgenden Schritte prozessbegleitend durchgeführt werden, z. B. zeitlich nacheinander oder in beliebiger Reihenfolge:
- Ermitteln von Herstellungsprozessdaten an der Herstellungsvorrichtung, z. B. an einer Folienanlage oder dergleichen, bei der Folienherstellung (der Folie),
- Ermitteln von Weiterverarbeitungsprozessdaten an der Weiterverarbeitungsvorrichtung, z. B. an einem Wickelstretch-Automaten, und/oder an einer Kaschier- und Laminiermaschine, und/oder an einer Druckmaschine, und/oder an einem Metallisierer, und/oder einem Tiefzieh-Automaten, und/oder an einem Umroller, oder dergleichen, bei der Weiterverarbeitung (mit der und/oder an der Folie),
- Durchführen einer Datenübertragung zur Bereitstellung der Herstellungsprozessdaten und/oder der Weiterverarbeitungsprozessdaten,
- Ermitteln einer Korrelation zwischen den Herstellungsprozessdaten und den Weiterverarbeitungsprozessdaten, wobei mindestens ein Bewertungskriterium ausgewertet wird, sodass sein Bewertungsergebnis bestimmt wird,
- Bereitstellen des Bewertungsergebnisses und/oder der Prozessdaten, insbesondere der Herstellungsprozessdaten und/oder der Weiterverarbeitungsprozessdaten.

Mit anderen Worten werden Prozessdaten sowohl bei der Folienherstellung als auch bei der Weiterverarbeitung ermittelt, insbesondere (zwischen)gespeichert und ausgewertet, um einen Zusammenhang zwischen den Herstellungsprozessdaten und den Weiterverarbeitungsprozessdaten zu ermitteln. Dies hat insbesondere den Vorteil, dass anstelle von unzureichenden separaten Laborprüfungen der reale Teilprozess der Weiterverarbeitung zur Überprüfung der Folienherstellung dienen kann. Insbesondere erfolgt bei der Folienherstellung die Herstellung einer Folie, welche bei der Weiterverarbeitung direkt weiterverarbeitet wird und/oder zur Verarbeitung eines Produktes (z. B. zur Verpackung) genutzt wird. Insbesondere ist unter der Folie dabei eine Kunststofffolie zu verstehen.

Unter dem Bereitstellen von Informationen und/oder Daten, wie des Bewertungsergebnisses und/oder der Prozessdaten (also z. B. der Herstellungsprozessdaten und/oder der Weiterverarbeitungsprozessdaten), wird insbesondere eine Bereitstellung digitaler Daten und/oder eine (digitale) Datenübertragung und/oder ein Datenaustausch und/oder eine Bereitstellung als Download und/oder eine Speicherung auf einem (z. B. elektronischen) Datenträger und/oder eine Anzeige der Daten (wie dem Bewertungsergebnis) auf z. B. einer Anzeige- und/oder Steuervorrichtung und/oder einer Internetseite und/oder ein Ausdrucken der Informationen in lesbarer Form verstanden. Insbesondere ist es denkbar, dass die Bereitstellung für Menschen lesbar oder ausschließlich maschinenlesbar (z. B. kodiert) erfolgt. Auch kann es möglich sein, dass die Informationen und/oder Daten verschlüsselt bereitgestellt werden.

Bevorzugt kann das Bereitstellen und/oder die Datenübertragung über eine Kommunikations- und/oder Daten- und/oder Funk- und/oder Netzwerk- und/oder Mobilfunk- und/oder Internet- Verbindung erfolgen. Die Kommunikationsverbindung umfasst z. B. eine Internetverbindung, z. B. über Mobilfunk, und/oder dergleichen. Insbesondere erfolgt die Datenübertragung dabei über ein Übertragungssystem, z. B. einem Netzwerk. Das Netzwerk umfasst bspw. das Internet und/oder ein globales Netzwerk und/oder ein WAN (Wide Area Network) und/oder ein MAN (Metropolitan Area Network) und/oder ein LAN (Local Area Network) und/oder ein GAN (Global Area Network) und/oder ein Mobilfunknetz und/oder eine Funkverbindung und/oder ein Bussystem und/oder ein WLAN (Wireless LAN) und/oder dergleichen.

Vorzugsweise wird unter "prozessbegleitend" verstanden, dass die Schritte des erfindungsgemäßen Verfahrens, wie das Ermitteln der Prozessdaten und/oder der Korrelation, während des gesamten Prozesses und/oder während sämtlicher Teilprozesse und/oder während der tatsächlichen Folienherstellung und/oder Weiterverarbeitung und/oder unter realen Bedingungen im insbesondere produktiven Betrieb durchgeführt werden. Insbesondere sind damit die Folienherstellung und/oder die Weiterverarbeitung, also insbesondere die Teilprozesse, die tatsächlichen (Produktions-) Prozesse, und somit nicht nur Versuchsprozesse oder Laboruntersuchungen.

Insbesondere kann es sich im Rahmen der Erfindung vorteilhaft auswirken, wenn z. B. auch nur innerhalb eines bestimmten Teilprozesses (wie der Folienherstellung oder der Weiterverarbeitung) die darin ermittelten Prozessdaten verwendet werden, um die Teilprozessparameter dieses bestimmten Teilprozesses zu steuern und/oder anzupassen und/oder zu optimieren. Z. B. kann im ersten Teilprozess ein Teilprozessparameter einer zweiten Herstellungsvorrichtung dadurch angepasst werden, dass erste Herstellungsprozessdaten einer ersten Herstellungsvorrichtung, welche der zweiten Herstellungsvorrichtung vorgelagert ist, ausgewertet werden. In gleicher Weise kann z. B. im zweiten Teilprozess ein Teilprozessparameter einer zweiten Weiterverarbeitungsvorrichtung dadurch angepasst werden, dass erste Weiterverarbeitungsprozessdaten einer ersten Weiterverarbeitungsvorrichtung, welche der zweiten Weiterverarbeitungsvorrichtung vorgelagert ist, ausgewertet werden. Unter Prozessparameter werden dabei z. B. steuerbare funktionale Parameter der Vorrichtungen im jeweiligen Teilprozess verstanden, welche z. B. auch vereinfacht mittels einer Rezeptur (z. B. Folienrezeptur) für die Vorrichtung vorgegeben werden können.

Erfindungsgemäß ist vorgesehen, dass bei der Datenübertragung die Herstellungsprozessdaten produktbezogen und/oder auftragsbezogen für ein jeweiliges Produkt der Folienherstellung bereitgestellt und/oder dauerhaft gespeichert werden, wobei die produktbezogenen und/oder auftragsbezogen Herstellungsprozessdaten über eine Internetverbindung an eine zentrale Verarbeitungsvorrichtung übertragen werden. Ferner kann vorgesehen sein, dass bei der Datenübertragung die Herstellungsprozessdaten produktbezogen und/oder auftragsbezogen für ein jeweiliges Produkt der Folienherstellung und/oder Weiterverarbeitung bereitgestellt und/oder dauerhaft gespeichert werden, wobei vorzugsweise die produktbezogenen und/oder auftragsbezogen Herstellungsprozessdaten über eine Kommunikations- und/oder Internetverbindung an eine zentrale Verarbeitungsvorrichtung übertragen werden, wobei bevorzugt zumindest einer der nachfolgenden Schritte vorgesehen ist, wobei die Schritte vorzugsweise nacheinander oder in beliebiger Reihenfolge durchgeführt werden:
- Auswählen der für die Weiterverarbeitung relevanten Herstellungsprozessdaten und/oder der Korrelation und/oder des Bewertungsergebnisses, sodass eine Auswahl bestimmt wird,
- Bereitstellen der Auswahl für die Weiterverarbeitung,
- Anpassen der Weiterverarbeitung anhand der Auswahl.

Hierdurch kann der Vorteil erzielt werden, dass die Weiterverarbeitung anhand der Prozessdaten aus der Folienherstellung optimiert werden kann. Das Produkt ist bspw. als ein Teilprozessprodukt, wie z. B. eine Folienrolle als Ergebnis der Folienherstellung, ausgeführt. Insbesondere kann somit der Lebenszyklus der Folienrolle vom Auftrag bis zur Nutzung in Zusammenhang gesetzt werden und damit können unterschiedliche Daten miteinander in Verbindung gebracht werden.

Vorzugsweise umfassen die Herstellungsprozessdaten zumindest eine der nachfolgenden Informationen:
- ein Maß für die relative Orientierung der Folie,
- die Foliendicke,
- die Lauflänge,
- eine Wickelcharakteristik,
- ein Maß für die Steifigkeit und/oder Elastizität der Folie, z.B. über einen E-Modul
- ein Maß für die Anzahl und/oder Größe von Störstellen in der Folie, z.B. über digitale Bildverarbeitung z. B. zur Erfassung von Stippen,
- ein Maß für die relative Kristallinität der Folie,
- die Dicke und/oder Dickenverteilung von funktionalen Einzelschichten innerhalb der Folie, insbesondere in einem Randbereich der Folie,
- ein Maß für die Härte der der Folienrolle bzw. die eingewickelte Luft insbesondere über dem gesamten Durchmesser,
- eine Folienbreite,
- ein Rollengewicht,
- eine Dichte der Folie,
- ein Rollendurchmesser,
- eine Geometrie der Wickelhülse,
- Informationen über die Abkühlung, insbesondere den Abkühlverlauf der Folie,
- eine Kennzeichnung, insbesondere zum Folienprodukt und/oder Auftrag und/oder zur Rezeptur,
- eine Sicherheitskennzeichnung, welche insbesondere zur Gewährleistung des Produktschutzes eine fälschungsgeschützte Kennzeichnung des Produktes aufweist, welche vorzugsweise die Authentizität indiziert.

Bevorzugt umfassen die Herstellungsprozessdaten auch Werte und/oder Wertebereiche für reale und/oder maximal zulässige Abweichungen für zumindest einige dieser Informationen der Herstellungsprozessdaten. Insbesondere können die Herstellungsprozessdaten ferner Qualitätsdaten der Folie umfassen. Die produktbezogene Bereitstellung erfolgt vorzugsweise derart, dass ein eindeutiger Identifikator für das jeweilige Produkt generiert wird, welcher eine eindeutige Zuordnung (z. B. der Herstellungsprozessdaten) zu dem Produkt ermöglicht, welches z. B. gemäß diesen Herstellungsprozessdaten produziert wurde. Das Maß für die relative Orientierung und/oder die Kristalinität der Folie kann dabei Informationen über ein Verformungsverhalten und/oder eine optische Eigenschaft der Folie umfassen. Insbesondere kann durch die Sicherheitskennzeichnung ferner eine Rechteverwaltung ermöglicht werden, so dass zusätzlich zum Fälschungsschutz auch eine differenzierte Rechtevergabe für unterschiedliche Stakeholder möglich ist. So kann der Identifikator einen Zugang zu einer zentralen Verarbeitungsvorrichtung ermöglichen, welche eine Rechtevergabe verwaltet.

Bevorzugt kann es auch vorgesehen sein, dass bei der Weiterverarbeitung und/oder durch die Weiterverarbeitungsvorrichtung eine Sicherheitskennzeichnung überprüft wird. Insbesondere ist es möglich, dass durch die Sicherheitskennzeichnung eindeutig die Authentizität des Produktes, z. B. der Folie, zur Gewährleistung des Produktschutzes festgestellt / bestätigt wird. Hierzu kann es insbesondere möglich sein, dass die Sicherheitskennzeichnung durch und/oder an der Herstellungsvorrichtung insbesondere als Herstellungsprozessdaten ermittelt wird, und/oder über die Datenübertragung bereitgestellt wird. Insbesondere kann die Sicherheitskennzeichnung sowohl an dem Produkt produktbezogen angebracht werden, als auch über die Datenübertragung für die Weiterverarbeitung bereitgestellt werden. Bei der Weiterverarbeitung kann somit z. B. die produktbezogene Sicherheitskennzeichnung mit der bereitgestellten Sicherheitskennzeichnung verglichen werden. Auch ist es denkbar, dass keine Anbringung der Sicherheitskennzeichnung erfolgen muss, und die bereitgestellte Sicherheitskennzeichnung z. B. anhand von produktspezifischen Eigenarten des hergestellten Produktes, z. B. der Folie, gebildet wird, wie z. B. anhand der Herstellungsprozessdaten. Auch kann es möglich sein, dass die Sicherheitskennzeichnung fälschungsgeschützt ist, z. B. durch eine Kodierung, wobei insbesondere zur Entschlüsselung ein geheimer Schlüssel notwendig ist, welchen z. B. die Weiterverarbeitungsvorrichtung und/oder die Verarbeitungsvorrichtung aufweist.

Es ist ferner denkbar, dass die Datenübertragung als ein automatisierter Datenaustausch erfolgt, wobei der Datenaustausch derart durchgeführt wird, dass die Herstellungsprozessdaten zumindest teilweise an die Weiterverarbeitungsvorrichtung übertragen werden, und insbesondere die Weiterverarbeitungsprozessdaten zumindest teilweise an die Herstellungsvorrichtung übertragen werden, bevorzugt über eine Kommunikations- und/oder Internetverbindung. Mit anderen Worten kann es vorgesehen sein, dass die Datenübertragung als Datenaustausch zwischen der Herstellungsvorrichtung und der Weiterverarbeitungsvorrichtung durchgeführt wird. Der Datenaustausch kann z. B. direkt erfolgen (d. h. insbesondere über eine direkte Kommunikation, wie über Mobilfunk) oder indirekt erfolgen (z. B. über ein Netzwerk und/oder eine zentrale Verarbeitungsvorrichtung). Insbesondere kann der Datenaustausch dabei automatisiert, z. B. im Hintergrund, erfolgen, um z. B. eine zuverlässige und schnelle Optimierung des Prozesses zu gewährleisten.

Es kann vorzugsweise möglich sein, dass eine oder mehrere Vorrichtungen in einem ersten Teilprozess des Prozesses, z. B. der Folienherstellung, und in einem zweiten Teilprozess des Prozesses, z. B. der Weiterverarbeitung, vorgesehen sind. Die Vorrichtungen sind dabei bspw. die (bzw. erste und/oder zweite und/oder weitere) Herstellungsvorrichtung(en) und/oder die (bzw. erste und/oder zweite und/oder weitere) Weiterverarbeitungsvorrichtung(en). Somit ist es vorteilhafterweise möglich, dass auch bei aufwendigen und komplexen Prozessen eine Optimierung z. B. anhand der Korrelation erfolgen kann.

Es ist weiter denkbar, dass für die (z. B. drahtlose) Datenübertragung von einer (ersten) Weiterverarbeitungsvorrichtung an eine Herstellungsvorrichtung (und/oder eine zweite Weiterverarbeitungsvorrichtung) eine Anwahl der Herstellungsvorrichtung (und/oder der zweiten Weiterverarbeitungsvorrichtung) durch die (erste) Weiterverarbeitungsvorrichtung erfolgt, z. B. durch die Anwahl einer vorrichtungsspezifischen Kennzeichnung, wie einer Mobilfunknummer, welche z. B. über eine SIM (subscriber identity module) der Vorrichtung bestimmt wird. Dies ermöglicht eine zuverlässige Datenübertragung, insbesondere automatisiert im Hintergrund, d. h. bspw. ohne Mitwirkung eines Bedieners und/oder eines Menschen.

Ferner kann es im Rahmen der Erfindung vorgesehen sein, dass die Datenübertragung derart durchgeführt wird, dass die Herstellungsprozessdaten und/oder die Weiterverarbeitungsprozessdaten zumindest teilweise an eine zentrale Verarbeitungsvorrichtung übertragen werden, z. B. an einen Netzwerk- und/oder Internet-Server, bevorzugt über eine Kommunikations- und/oder Internetverbindung, wobei besonders bevorzugt die Verarbeitungsvorrichtung anschließend die Korrelation ermittelt und/oder die übertragenen Herstellungs- und/oder Weiterverarbeitungsprozessdaten und/oder die Korrelation über die Kommunikations- und/oder Internetverbindung zur weiteren Auswertung bereitstellt, insbesondere über eine Internetseite und/oder eine über ein Netzwerk bedienbare Applikation. Hierdurch wird der Vorteil erzielt, dass die Informationen zur Optimierung des Prozesses, z. B. das Bewertungsergebnis oder die Prozessdaten, einfach und kostengünstig bereitgestellt werden können und flexibel (z. B. sowohl bei der Folienherstellung als auch bei der Weiterverarbeitung) abgerufen und genutzt werden können. Insbesondere kann es vorgesehen sein, dass ausschließlich die Verarbeitungsvorrichtung die Korrelation ermittelt. Dies kann z. B. dadurch gewährleistet werden, dass die Herstellungsprozessdaten und/oder Weiterverarbeitungsprozessdaten verschlüsselt übertragen werden, und (z. B. ausschließlich) die Verarbeitungsvorrichtung die Schlüsselinformation zur Entschlüsselung aufweist.

Zudem ist im Rahmen der Erfindung denkbar, dass die Datenübertragung anhand eines den Herstellungsprozessdaten und/oder Weiterverarbeitungsprozessdaten dauerhaft zugeordneten Identifikators, insbesondere eines maschinenlesbaren und/oder QR-Codes, erfolgt, welcher vorzugsweise an einem Produkt (d. h. insbesondere einem Gesamt- oder Teilprozessprodukt) des Prozesses befestigt wird. Insbesondere erfolgt die Befestigung an eine Folienrolle. Insbesondere weist der Identifikator einen Code auf, welcher die Zuordnung zu den Herstellungsprozessdaten ermöglicht. Da der Identifikator vorteilhafterweise am (Teilprozess-) Produkt der Folienherstellung, und somit bspw. an der Folie, befestigt ist, können bei der Weiterverarbeitung mit diesem Produkt (z. B. der Folie) die dabei ermittelten Weiterverarbeitungsprozessdaten in einfacher Weise den zugehörigen Herstellungsprozessdaten zugeordnet werden. Bspw. wird hierzu der Code an eine zentrale Verarbeitungsvorrichtung übertragen, bspw. zusammen mit den ermittelten Weiterverarbeitungsprozessdaten, sodass anhand der Zuordnung bzw. anhand des Codes die Korrelation mit den zugehörigen Herstellungsprozessdaten ermittelt werden kann. Auch ist es denkbar, dass der Code als Entschlüsselungsinformation zu Entschlüsselung der Herstellungsprozessdaten und/oder Weiterverarbeitungsprozessdaten dient. Dabei kann der Identifikator insbesondere manuell oder automatisiert befestigt werden. Bei manueller Befestigung können Anschaffungskosten für notwendige Ausrüstung reduziert sein, während bei automatisiertem Befestigen eine Prozesssicherheit erhöht sein kann.

Des Weiteren kann es möglich sein, dass über mindestens einen Identifikator eine individuelle Identifikation von festgelegten Verarbeitungs- und/oder Folienparametern, wie z. B. dem einzelnen Nutzen über der Folienbreite, durchführbar ist. Die Prozessdaten können dann bspw. in Abhängigkeit von diesen Verarbeitungs- und/oder Folienparametern übertragen und/oder ausgewertet und/oder korreliert werden. Weiter kann insbesondere der Identifikator auch für die Weiterverarbeitung genutzt werden, um z. B. die Weiterverarbeitung anhand der Verarbeitungs- und/oder Folienparameter zu steuern. Hierdurch wird der Vorteil erzielt, dass der Identifikator für eine Vielzahl von Aufgaben und/oder zur Optimierung der Weiterverarbeitung eingesetzt werden kann. Dabei kann der Identifikator vorzugsweise manuell oder automatisiert ausgelesen werden. Wie bereits in Bezug auf das Befestigen erläutert, können bei manuellem Auslesen Anschaffungskosten für notwendige Ausrüstung reduziert sein, während bei automatisiertem Auslesen eine Prozesssicherheit erhöht sein kann.

Es ist ferner auch denkbar, dass nach der Datenübertragung, z. B. der Herstellungsprozessdaten an die Weiterverarbeitungsvorrichtung, die Weiterverarbeitung eingeleitet wird und/oder die Ermittlung der Weiterverarbeitungsprozessdaten erfolgt, wobei insbesondere die ermittelten Weiterverarbeitungsprozessdaten ebenfalls dem Identifikator dauerhaft zugordnet und/oder an eine zentrale Verarbeitungsvorrichtung übertragen werden. Insbesondere wird dabei die Weiterverarbeitung zumindest teilweise anhand der Herstellungsprozessdaten angepasst. Dies hat den Vorteil, dass die Weiterverarbeitung durch den Datenaustausch einfach und zuverlässig an die Besonderheiten eines bestimmten hergestellten Produktes angepasst werden kann. Diese Besonderheiten, z. B. bei der hergestellten Folie, werden dabei bspw. durch die Folienherstellung selbst bedingt. So kann es bspw. bei der Folienherstellung zu Abweichungen und/oder Materialschwankungen kommen, welche sich auf das Produkt und damit auf den gesamten Prozess auswirken. Der Ausdruck "dauerhaft" bezieht sich insbesondere darauf, dass die Information persistent ist und z. B. nicht in einer flüchtigen Datenspeichereinheit vorliegt. Unter dem Produkt wird insbesondere auch ein Zwischenprodukt verstanden, z. B. des ersten Teilprozesses.

Vorteilhafterweise kann bei der Erfindung vorgesehen sein, dass die Datenübertragung während der Folienherstellung und/oder Weiterverarbeitung, insbesondere prozessbegleitend im Hintergrund, vorzugsweise zyklisch und/oder ereignis-getriggert, zwischen einer oder mehreren Weiterverarbeitungsvorrichtungen und/oder einer oder mehreren Herstellungsvorrichtungen erfolgt. Bevorzugt kann somit prozessbegleitend - insbesondere während die Weiterverarbeitung mit der Folie erfolgt, also z. B. ein Produkt entsteht und/oder verarbeitet (z. B. bedruckt oder angeordnet) wird - eine Optimierung erfolgen und/oder eine Speicherung und/oder Übertragung und/oder Auswertung und/oder eine Korrelation der Prozessdaten erfolgen. Es ist denkbar, dass dies zyklisch während des gesamten (Teil-) Prozesses und/oder getriggert bei bestimmten Ergebnissen erfolgt. Insbesondere kann vor der Datenübertragung eine Bestätigung durch einen Bediener erforderlich sein. Insbesondere kann die Datenübertragung nach der Folienherstellung erfolgen. So kann die Datenübertragung für einen Prozesszeitpunkt vorgesehen sein, zu dem eine Folienrolle als Ergebnis der Folienherstellung fertiggestellt ist, wobei z.B. ausreichend verkaufsfertige Folie auf eine Wickelhülse der Folienrolle aufgewickelt ist. Vorzugsweise kann vor oder nach der Datenübertragung ferner ein Wechsel einer Wickelhülse vorgesehen sein.

Des Weiteren ist es denkbar, dass der (bzw. ein einziger) Prozess, insbesondere jeder Teilprozess und/oder die Folienherstellung und/oder die Weiterverarbeitung (desselben Prozesses), ein oder mehrere Herstellungs- und/oder Weiterverarbeitungsvorrichtungen umfasst, wobei an den jeweiligen Herstellungs- und/oder Weiterverarbeitungsvorrichtungen jeweils zugeordnete Herstellungs- und/oder Weiterverarbeitungsprozessdaten ermittelt werden, wobei prozessbegleitend (z. B. innerhalb desselben Prozesses) ein oder mehrere Korrelationen für jeweils unterschiedliche der jeweils zugeordneten Herstellungs- und/oder Weiterverarbeitungsprozessdaten ermittelt werden, sodass insbesondere die Folienherstellung und/oder Weiterverarbeitung anhand der Korrelation, insbesondere prozessbegleitend und/oder im Hintergrund, gesteuert und/oder angepasst wird. Dies hat den Vorteil, dass beim Einsatz mehrerer Vorrichtungen, z. B. Weiterverarbeitungsvorrichtungen bei der Weiterverarbeitung mit der Folie, auch mehrere Prozessschritte jeweils einzeln optimiert werden können. Insbesondere können die Ergebnisse (z. B. die erste ermittelte Korrelation oder ein erstes Bewertungsergebnis) einer ersten Vorrichtung dazu genutzt werden, die nachgelagerten Prozessschritte, z. B. einer der ersten Vorrichtung nachgelagerten zweiten Vorrichtung, zu optimieren. Ferner ist dabei vorteilhafterweise denkbar, dass Prozessgrenzen und/oder Parametergrenzen für die Herstellungs- und/oder Weiterverarbeitungsprozessdaten bestimmt und/oder angepasst werden.

Vorzugsweise ist eine Vorrichtung, z. B. die mindestens eine Herstellungsvorrichtung und/oder die mindestens eine Weiterverarbeitungsvorrichtung, eine Maschine (des Prozesses) und/oder ein industrieller Roboter, welcher unmittelbar und direkt am Produkt arbeitet, z. B. mit direktem Kontakt zur Folie. Die mindestens eine Herstellungsvorrichtung und/oder die mindestens eine Weiterverarbeitungsvorrichtung hat somit prozessbegleitend, d. h. während der Prozess durchgeführt wird, bspw. direkten Kontakt zur Folie und/oder zum Produkt, sodass hier eine Verarbeitung direkt an der Folie erfolgt. Somit umfasst die Vorrichtung insbesondere keine Steuerungsvorrichtung, welche separat von der eigentlichen Vorrichtung ausgeführt ist, z. B. einen separaten Computer (z. B. zur Steuerung und/oder Überwachung des Prozesses).

Es kann weiter möglich sein, dass das Bewertungsergebnis zumindest eine der nachfolgenden Informationen aufweist, welche vorzugsweise zumindest einer Vorrichtung (z. B. der Herstellungs- und/oder Weiterverarbeitungsvorrichtung) des Prozesses zugeordnet wird und/oder aus den Herstellungsprozessdaten und/oder den Weiterverarbeitungsprozessdaten ermittelt wird:
- zumindest eine Leistungskennzahl der zumindest einen Vorrichtung des Prozesses, insbesondere der Herstellungsvorrichtung und/oder der Weiterverarbeitungsvorrichtung, insbesondere eine Materialkennzahl und/oder eine Produktkennzahl und/oder eine Prozesskennzahl,
- zumindest ein Hinweis über (z. B. notwendige) Wartungsarbeiten (der Hinweis auf die Wartungsarbeiten erschließt sich z. B. aus einem Vergleich von Prozessdaten und/oder Korrelationen und/oder Bewertungsergebnissen, insbesondere mit geeigneten Referenzen, wie etwa der Historie der Maschine oder vergleichbarer Maschinen),
- zumindest eine Verarbeitungsgeschwindigkeit,
- zumindest eine mechanische und/oder optische Eigenschaft der Folie,
- zumindest eine Folienrezeptur für die Folienherstellung und/oder Weiterverarbeitung,
- zumindest eine Schwankungsbreite der Kräfte und/oder Momente bei der Folienherstellung und/oder Weiterverarbeitung,
- Hinweise und/oder Parameter und/oder Optimierungsvorschläge für die Weiterverarbeitung und/oder die Folienherstellung,
- zumindest ein Hinweis über die Qualität des Produktes, insbesondere die Konsistenz bestimmter Produkteigenschaften,
- zumindest ein Hinweis über die Qualität des Prozesses, insbesondere die Konstanz bzw. die Schwankungsbreite bestimmter Parameter,
- zumindest ein Hinweis über Produktparameter wie Rollen- und/oder Hülsendimensionen, Gewichte, Dicken und/oder sonstigen Produktgewährleistungen,
- Informationen über einen der Folienherstellung vorgelagerten Prozessbaustein und/oder einen Rohstoff der Weiterverarbeitung und/oder der Folienherstellung,
- zumindest ein Hinweis, ein Prozessfenster anzupassen,
- zumindest eine Angabe über das Aufschmelzverhalten einzelner spezifischer Rohstoffe einer Rezeptur in einem Extruder, insbesondere hinsichtlich einer Aussage über die Auswahl, Qualität und/oder Konsistenz der verwendeten Rohstoffe,
wobei das Bewertungsergebnis zumindest teilweise einem Folienhersteller und/oder einem Folienweiterverarbeiter, insbesondere über ein Netzwerk, vorzugsweise durch eine Internetplattform, bereitgestellt wird. Die Optimierungsvorschläge können dabei z. B. Informationen umfassen, welche einem Folienweiterverarbeiter angezeigt werden, und/oder Informationen umfassen, welche automatisiert und/oder im Hintergrund umgesetzt werden, z. B. durch die (erste oder zweite oder eine sonstige) Weiterverarbeitungsvorrichtung und/oder Herstellungsvorrichtung. Die Internetplattform ist z. B. eine Internetseite oder eine Applikation, welche über ein Netzwerk und/oder über das Internet bedient wird. Dies ermöglicht eine besonders einfache Gewährleistung der Prozessqualität. Das Prozessfenster kann dabei Informationen über Prozessgrenzen oder Parametergrenzen enthalten, welche beispielsweise hinsichtlich einer Qualitätsbedingung ausgelegt sein können oder ausgelegt sein können, einen günstigen Herstellprozess zu ermöglichen.

Es kann ferner vorgesehen sein, dass anhand des Bewertungsergebnisses und/oder der Korrelation ein der Folienherstellung vorgelagerter Prozessbaustein bewertet wird. Alternativ oder zusätzlich ist es denkbar, dass anhand der Korrelation und/oder anhand des Bewertungsergebnisses ein Rohstoff identifiziert und/oder beurteilt wird. Der Rohstoff wird bspw. bei der Weiterverarbeitung und/oder Folienherstellung, z. B. in einem Extruder, verwendet, um insbesondere ein (End-) Produkt der Folienherstellung und/oder Weiterverarbeitung herzustellen. Insbesondere kann somit ein vorgelagerter Prozessbaustein der Prozesskette, z. B. der Reaktor, beurteilt und/oder bewertet werden. Hierzu werden insbesondere Herstellungsprozessdaten berücksichtigt und/oder mit dem Ergebnis der Folienherstellung, z. B. automatisiert und/oder bei der Korrelation, verglichen. Hierzu kann bspw. auch ein Datenaustausch zwischen dem vorgelagerten Prozess, z. B. mit dem Reaktor, und der Folienherstellung und/oder der Weiterverarbeitung vorgesehen sein.

Gemäß einem weiteren Vorteil kann vorgesehen sein, dass die Herstellungsprozessdaten und/oder die Weiterverarbeitungsprozessdaten zumindest eine der nachfolgenden Informationen umfassen, welche vorzugsweise durch einen Sensor (z. B. von einer der Vorrichtungen) bei der Vorrichtung des Prozesses ermittelt werden:
- zumindest eine Angabe über einen Zusammenhang zwischen Spannung und Dehnung, wie beispielsweise eine Spannungs-Dehnungskurve der Folie,
- zumindest eine Angabe über Abwickelkräfte bei der Folie,
- eine Anzahl und/oder Art von Störungen bei der Weiterverarbeitung, wie z. B. eine Anzahl der Abrisse bei der Weiterverarbeitung,
- eine Anzahl und/oder ein Typ eines Produktes der Weiterverarbeitung oder eines weiteren Prozesses, insbesondere einer verpackten Palette,
- einen gemessenen Kraftwert und/oder ein Drehmoment bei der Vorrichtung,
- einen Temperaturwert, welcher bei der Vorrichtung erfasst wurde,
- eine Folienrezeptur für die Folienherstellung und/oder Weiterverarbeitung,
- optische und/oder akustische Informationen, welche insbesondere bei der Vorrichtung erfasst wurden,
- Fehler oder Warnungen, insbesondere Fehlermeldungen der Vorrichtung und/oder Datenübertragungsfehler,
- eine Anzahl von erfolgten Weiterverarbeitungsschritten mit der Folie, z. B. Anzahl von verpackter Paletten, und/oder hergestellter Druckmuster, und/oder hergestellter Verpackungseinheiten,
- Informationen aus Daten einer Modellbildung,
- Anzahl der, insbesondere fehlerlos, erzeugten und/oder verpackten Produkte pro Folienrolle,
- Informationen über lokale Wanddicken oder Wanddickenänderungen bei einem Verformungsprozess der Folie.

Ein Rezept und/oder eine Folienrezeptur umfasst dabei bspw. Vorgaben und/oder Einstellungen für Rohstoffe und/oder Einzelschichtdicken der Folie und/oder Prozessparameter, insbesondere für bestimmte Vorrichtungen des Prozesses. Insbesondere ist es denkbar, dass die Herstellungsprozessdaten und/oder die Weiterverarbeitungsprozessdaten auch weitere Informationen umfassen, insbesondere über an den Vorrichtungen überwachten Prozessparametern. Dabei kann es auch vorgesehen sein, dass der Umfang der Herstellungsprozessdaten und/oder der Weiterverarbeitungsprozessdaten, also die Art und Anzahl der darin vorhandenen Informationen, einstellbar und/oder vordefiniert und/oder veränderbar ist. Dies ermöglicht eine flexible Anpassung an verschiedene Prozesse.

Insbesondere können vorteilhafterweise die Herstellungsprozessdaten und/oder die Weiterverarbeitungsprozessdaten zumindest eine der nachfolgenden Informationen über ein Prozessereignis umfassen, welche vorzugsweise durch mindestens einen Sensor bei der Vorrichtung des Prozesses ermittelt werden:
- Zeitpunkt des Auftretens des Prozessereignisses,
- Status einer Folienrolle, insbesondere zum Zeitpunkt des Prozessereignisses.

Dabei kann unter dem Status der Folienrolle insbesondere eine Lage in Relation zur Folienrolle verstanden werden. Somit kann der Status der Folienrolle beispielsweise einen Laufmeter der Folienrolle und/oder einen insbesondere aktuellen Durchmesser der Folienrolle umfassen. Dadurch kann bestimmt oder festgestellt werden, wieviel Länge der Folie bis zum Auftreten des Prozessereignisses bereits auf die Rolle aufgewickelt wurde oder von der Rolle abgewickelt wurde. Ein Prozessereignis kann dabei vorzugsweise eine Störung, wie z.B. ein erfolgloses Öffnen eines Folienschlauches, ein Folienriss oder ein Bruch eines aus der Folie geformten Sackes, sein. Durch Bereitstellen einer Lage- und/oder Zeitinformation des Prozessereignisses kann der Herstellprozess gezielt optimiert werden, wenn festgestellt wird, dass das Prozessereignis sich nach einer bestimmten Zeit im Prozess oder an einer bestimmten Stelle der Folienrolle wiederholt. Das Prozessereignis kann jedoch auch Folgeereignis eines weiteren Prozessereignisses sein. Dabei kann vorzugsweise auf das Prozessereignis aus dem Folgeereignis geschlossen werden. So kann beispielsweise durch eine Kamera oder weitere Sensorik erkannt werden, dass ein Teil eines Druckbildes fehlt, ein Vorzug einen veränderten Schlupf aufweist oder im Prozess veränderte Kräfte und/oder Momente auftreten. Daraus kann wiederum auf ein charakteristisches Prozessereignis geschlossen werden.

Es kann insbesondere vorgesehen sein, dass das Produkt und/oder die (z. B. hergestellte) Folie als zumindest eine der folgenden ausgeführt ist:
- eine Flachfolie, und/oder
- eine Blasfolie, bzw. Gießfolie oder Blasfolie, und/oder
- eine Folie mit überwiegenden Anteilen an Polyethylen, z. B. LLDPE (Linear low-density polyethylene), LDPE (Low-density polyethylene) oder HDPE (High-density polyethylene) Typen, und/oder
- eine Folie mit überwiegenden Anteilen an Polypropylen, und/oder
- eine Laminierfolie, und/oder
- eine Kaschierfolie, und/oder
- eine Barrierefolie, und/oder
- eine Shrink-Folie, und/oder
- eine Stretch Hood Folie, und/oder
- eine FFS Folie, und/oder
- eine Oberflächenschutzfolie, und/oder
- eine Tiefziehfolie, und/oder
- eine Beutelfolie, und/oder
- eine bedruckte Folie, und/oder
- eine metallisierte Folie, und/oder
- eine Stretchfolie.

Alternativ oder zusätzlich ist es denkbar, dass die Weiterverarbeitungsprozessdaten durch eine Erfassung zumindest einer der nachfolgenden Prozessparameter an der mindestens einen Herstellungsvorrichtung und/oder Weiterverarbeitungsvorrichtung, insbesondere durch einen Sensor der jeweiligen Herstellungsvorrichtung und/oder Weiterverarbeitungsvorrichtung, ermittelt werden:
- mechanische Eigenschaften der Folie, wobei vorzugsweise die Folie als eine Stretchfolie, insbesondere als eine Stretch Hood, Collation Shrink, Stretch-Hood, Shrink-Hood oder Wickelstretch Folie, ausgeführt ist,
- Reibwerte der Folie, wobei vorzugsweise die Folie als eine FFS Folie ausgeführt ist,
- Verformungskräfte und/oder Bogenlauf und/oder Restwanddicke der Folie, wobei vorzugsweise die Folie als eine Tiefziehfolie ausgeführt ist,
- Parameter eines E-Moduls (Elastizitätsmodul) und/oder Defekte der Folie und/oder Wickelparameter und/oder Abwickelkräfte und/oder Bogenlauf, wobei vorzugsweise die Folie als eine bedruckte Folie ausgeführt ist,
- Wickelparameter und/oder Abwickelkräfte und/oder Bogenlauf der Folie, wobei vorzugsweise die Folie als eine Metallisierfolie oder Laminier- oder Kaschierfolie ausgeführt ist,
- das Siegelverhalten der verwendeten Folie, wie etwa die eingestellte SIT (Sealing Initiation Temperature) oder Siegeldauer in Prozessen mit Heißsiegelung bzw. Ultraschallparameter in Prozessen mit Ultraschallsiegelung.

Hierdurch wir der Vorteil erzielt, dass durch die Berücksichtigung der Auswertung und/oder Korrelation dieser Informationen bei dem Prozess eine ausreichende Prozessstabilität gewährleistet werden kann bzw. der Prozess oder das Produkt oder das zugrunde liegende Modell optimiert und/oder weiterentwickelt werden kann. Unter der Restwanddicke kann insbesondere eine verbleibende Wanddicke verstanden werden, nachdem die Folie bei einer Weiterverarbeitung tiefgezogen wurde. Dabei kann vorzugsweise die Restwanddicke an Kanten bzw. Ecken betrachtet werden.

Es kann vorgesehen sein, dass ein oder mehr Weiterverarbeitungsprozessdaten an einer einzigen Weiterverarbeitungsvorrichtung ermittelt werden, welche insbesondere unterschiedlich ausgeführt sein können, z. B. in Bezug auf die Art der Informationen (z. B. der Prozessparameter), welche durch die Weiterverarbeitungsprozessdaten repräsentiert werden. Alternativ oder zusätzlich kann es möglich sein, dass die Weiterverarbeitungsprozessdaten, mit bspw. Informationen über das Abwickeln der Rolle (z. B. Bahnspannung über der Zeit), aus der Weiterverarbeitungsvorrichtung (wie einem Metallisierer) während der Weiterverarbeitung (prozessbegleitend) ausgewertet werden. Insbesondere erfolgt die Auswertung iterativ durch die Ermittlung einer Korrelation mit Herstellungsprozessdaten und/oder weiteren Weiterverarbeitungsprozessdaten, z. B. aus einem Aufwickelprozess (der Herstellungsvorrichtung). Es wird aus dieser Korrelation z. B. eine Antiblock- und/oder Puderdosierung bei der Folienherstellung und/oder ein Bewertungsergebnis bestimmt und insbesondere dazu genutzt, um den Wickelzug anzupassen. Das Bewertungsergebnis kann bspw. auch anhand der Korrelation und/oder einer Konstanz und Menge einer Antiblock-Dosierung bei der Weiterverarbeitung bestimmt werden.

Auch ist es optional denkbar, dass das Bewertungskriterium eine Rezeptur, insbesondere eine Folienrezeptur, und/oder eine folienbezogene Vorgabe, vorzugsweise mit vordefinierten Folieneigenschaften, und/oder mindestens einen Fertigungsparameter der Herstellungsvorrichtung und/oder eine Vorgabe der Weiterverarbeitungsvorrichtung für die Folie aufweist. So ist es beispielsweise denkbar, dass hierdurch gezielt Folieneigenschaften und/oder Qualitätsmerkmale (z. B. vor einer Weiterverarbeitung) vorgegeben können. Die zur Weiterverarbeitung genutzte Folie aus der Folienherstellung kann bspw. anhand der ermittelten Herstellungsprozessdaten optimal bestimmt werden.

Ferner ist es optional vorgesehen, dass die Korrelation anhand mindestens eines Prozessmodells ermittelt wird, wobei vorzugsweise eine lernfähige und/oder prädiktive Auswertung der Herstellungsprozessdaten und/oder der Weiterverarbeitungsprozessdaten durchgeführt wird. Insbesondere kann die Korrelation derart durchgeführt werden, dass anhand neu ermittelter Weiterverarbeitungsprozessdaten die Ermittlung der Korrelation und/oder eine Auswertung, z. B. eine Analyse, verbessert wird. Hierdurch können z. B. anhand gegebener ermittelter Herstellungsprozessdaten z. B. durch die Auswertung Vorhersagen getroffen werden, wie sich die Herstellungsprozessdaten auf die Weiterverarbeitung auswirken. Anhand dieser Vorhersage kann dann z. B. mindestens ein Optimierungsvorschlag für die Weiterverarbeitung bestimmt werden. Insbesondere können das Prozessmodell und/oder weitere Prozessmodelle durch eine Prozessmodellverarbeitung dadurch erstellt und/oder kalibriert und/oder weiterentwickelt werden, dass vorgelagerte und/oder (prozess)begleitende und/oder nachgelagerte spezifische Testmethoden und/oder Laborauswertungen durchgeführt werden. Insbesondere werden dabei die Weiterverarbeitungsprozessdaten redundant und/oder ergänzend oder alternativ genutzt, um die Prozessmodellverarbeitung, d. h. die Erstellung und/oder Kalibrierung und/oder Weiterentwicklung des Prozessmodells, durchzuführen.

In einer weiteren Möglichkeit kann vorgesehen sein, dass bei einer Auswahl von weiteren Herstellungsprozessdaten, welche für eine den weiteren Herstellungsprozessdaten zugeordnete Folie ermittelt sind, prädiktiv in Abhängigkeit von diesen weiteren Herstellungsprozessdaten anhand von mindestens einer zuvor ermittelten Korrelation ein voraussichtliches Ergebnis der Weiterverarbeitung der zugeordneten Folie und/oder ein voraussichtliches Verhalten der zugeordneten Folie in der Weiterverarbeitung vorhergesagt wird. Die weiteren Herstellungsprozessdaten sind dabei z. B. ein oder mehrere Prozessdaten, welche zuvor bereits ermittelt wurden, wobei für das diesen weiteren Herstellungsprozessdaten zugeordnete Produkt z. B. bereits eine Weiterverarbeitung durchgeführt wurde, und/oder bereits eine Korrelation anhand der hierbei ermittelten Weiterverarbeitungsprozessdaten ermittelt wurde. Insbesondere kann somit auf eine "historische" Datenbasis zurückgegriffen werden, um zukünftige Ergebnisse anhand der ermittelten Herstellungsprozessdaten bereits vor der Weiterverarbeitung vorherzusagen. Auf diese Weise kann dann z. B. auch ein Optimierungsvorschlag bestimmt werden und/der die Eignung für gewisse Anwendungsklassen oder Kategorien vorausgesagt werden. So kann die Folie bspw. in einer sehr schnell laufenden Applikation, z. B. einem High Speed Wrapper, eingesetzt werden und z. B. in Abhängigkeit der im Herstellungsprozess (Folienherstellung) ermittelten Stippenanzahl eine Häufung von unzulässigen Abrissen festgestellt werden. Insbesondere kann dann, wenn eine solche Häufung oder dergleichen festgestellt wird, eine neue Grenze für diese Applikation definiert werden und/oder das hergestellte Produkt dann einer weniger schnell laufenden Applikation zugeführt werden. Der Optimierungsvorschlag umfasst somit z. B. auch eine Information zur Prozessoptimierung, wie eine Prozessänderung aufgrund einer festgestellten Bedingung (wie die Häufung der Abrisse) anhand der Korrelation.

Es kann ferner vorgesehen sein, dass anhand der ermittelten Korrelation für erste Herstellungsprozessdaten und/oder erste Weiterverarbeitungsprozessdaten eine Vorhersage über ein vorhergesagtes Ergebnis, insbesondere über vorhergesagte Weiterverarbeitungsprozessdaten, der Weiterverarbeitung durchgeführt wird, insbesondere in Abhängigkeit von weiteren ermittelten Herstellungsprozessdaten, wobei vorzugsweise das Bewertungsergebnis das vorhergesagte Ergebnis umfasst. Somit ist eine weitere Verbesserung des Prozesses möglich.

Gemäß einer vorteilhaften Weiterbildung der Erfindung kann vorgesehen sein, dass die Korrelation dadurch ermittelt wird, dass eine Auswertung der ermittelten Herstellungsprozessdaten und der ermittelten Weiterverarbeitungsprozessdaten
- durch die Weiterverarbeitungsvorrichtung, und/oder
- durch die Herstellungsvorrichtung, und/oder
- durch eine zentrale Verarbeitungsvorrichtung, insbesondere durch ein ERP (Enterprise-Resource-Planning) -System und/oder durch einen Netzwerk- und/oder Internet-Server, erfolgt.

Die Bewertung dient dabei insbesondere zur Bereitstellung verschiedener Funktionen, insbesondere zur durchgängigen Qualitätssicherung und/oder Optimierung des Prozesses und/oder Optimierung des Produktes und/oder Überwachung der Performance und/oder Ermittlung von Fehlerursachen und/oder Fälschungsprüfung und/oder eine Diagnosefunktion und/oder zur Optimierung einer Prozessvorgabe, welche insbesondere für den Prozess der Folienherstellung und Weiterverarbeitung spezifisch ist. Diese Funktionen können dabei vorzugsweise durch eine Applikation, wie eine Internetanwendung und/oder der Prozessvorgabe und/oder das ERP-System, bereitgestellt werden.

Gemäß einem weiteren Vorteil kann vorgesehen sein, dass die Korrelation dadurch ermittelt wird, dass eine statistische Auswertung, vorzugsweise eine Regressionsanalyse, durchgeführt wird, wobei die Regressionsfunktion anhand der ermittelten Herstellungsprozessdaten und/oder den Weiterverarbeitungsprozessdaten geschätzt wird. Dies kann z. B. dadurch erfolgen, dass ein nichtparametrisches Regressionsverfahren, wie eine Kernel-Regression und/oder multivariate adaptive Regressions-Splines und/oder dergleichen durchgeführt wird. Alternativ oder zusätzlich ist es denkbar, dass eine Methode wie die Methode der kleinsten Quadrate oder die Maximum-Likehood-Methode oder dergleichen ausgeführt wird. Insbesondere kann auch die Auswertung dadurch verbessert werden, dass vorgelagerte und/oder begleitende und/oder nachgelagerte spezifische Testmethoden und/oder Laborauswertungen durchgeführt werden und/oder die Weiterverarbeitungsprozessdaten prozessbegleitend und/oder ergänzend und/oder redundant und/oder alternativ herangezogen werden. Weiter ist es denkbar, dass alternativ oder zusätzlich eine lineare Regression und/oder eine semiparametrische Regression und/oder eine robuste Regression durchgeführt wird. Hierdurch kann z. B. auch eine sehr zuverlässige Vorhersage über zu erwartende Ergebnisse der Weiterverarbeitung anhand gegebener Herstellungsprozessdaten erfolgen.

Es kann ferner möglich sein, dass die Korrelation dadurch ermittelt wird, dass eine Mustererkennung durchgeführt wird, vorzugsweise durch eine syntaktische und/oder statistische und/oder strukturelle Mustererkennung, wobei bevorzugt die nachfolgenden Schritte vorgesehen sind, welche bevorzugt nacheinander durchgeführt werden, insbesondere um die Mustererkennung durchzuführen:
- Vorverarbeitung der ermittelten Herstellungsprozessdaten und/oder Weiterverarbeitungsprozessdaten, insbesondere durch Signalverarbeitung, insbesondere Filterung, vorzugsweise sodass ein Rauschen und/oder Ausreißer der (Prozess-) Daten reduziert werden,
- Gewinnen von Merkmalen und/oder Reduzieren von Merkmalen, insbesondere durch eine Transformation und/oder durch eine Varianzanalyse,
- Klassifizierung der Merkmale, insbesondere in Klassen, wobei bevorzugt das Bewertungskriterium die Klassen definiert.

Die Mustererkennung wird bspw. durch eine Verarbeitungsvorrichtung durchgeführt, insbesondere durch einen Prozessor und/oder digitalen Signalprozessor der Verarbeitungsvorrichtung, um eine zuverlässige und schnelle Korrelation zu gewährleisten. Besonders vorteilhaft kann die Korrelation auch für die Optimierung und Weiterentwicklung von einem Prozessparameter und/oder Produkt auf der Herstellungs- und/oder Verarbeitungsmaschine genutzt werden. Auf der Herstellungsseite kann z. B. durch das kontinuierliche Feedback aus der Weiterverarbeitung beispielsweise eine zielgerichtete Reduzierung der Herstellkosten (ohne Auswirkung auf die Weiterverarbeitung), und/oder eine gezielte Optimierung von ausgewählten Produkteigenschaften und/oder die Einführung von besonderen internen Verareitungs- bzw. Qualitätsmaßnahmen aufgrund des Feedbacks der Weiterverarbeitung dadurch vorgenommen werden, dass Produktparameter und/oder Prozessparameter angepasst werden in Abhängigkeit von dem Feedback. Auf der Weiterverarbeitungsseite ist es z. B. möglich, eine Optimierung der Gesamtprodukteigenschaften unter Balancierung der Eigenschaften für das Folienprodukt und der Eigenschaften für die Weiterverarbeitung vorzunehmen.

Ebenfalls Gegenstand der Erfindung ist ein System zur Bewertung mindestens eines industriellen Prozesses zur Folienherstellung einer Folie, insbesondere einer Stretchfolie oder dergleichen, und/oder Weiterverarbeitung mit der Folie, umfassend:
- mindestens eine Herstellungsvorrichtung zur Folienherstellung der Folie,
- mindestens eine Weiterverarbeitungsvorrichtung zur Weiterverarbeitung mit der Folie.

Hierbei ist insbesondere vorgesehen, dass für eine Datenübertragung ein Übertragungssystem mit der Herstellungsvorrichtung und der Weiterverarbeitungsvorrichtung (z. B. elektrisch, insbesondere über Funk und/oder über elektrische Leitungen) verbunden ist, sodass Herstellungsprozessdaten der Herstellungsvorrichtung und Weiterverarbeitungsprozessdaten der Weiterverarbeitungsvorrichtung bereitstellbar und/oder zur Ermittlung einer Korrelation auswertbar sind, wobei anhand der (ermittelten) Korrelation ein Bewertungsergebnis bestimmbar ist. Damit bringt das erfindungsgemäße System die gleichen Vorteile mit sich, wie sie ausführlich mit Bezug auf ein erfindungsgemäßes Verfahren beschrieben worden sind. Zudem kann das erfindungsgemäße System geeignet sein, gemäß einem erfindungsgemäßen Verfahren betreibbar zu sein.

Des Weiteren ist es denkbar, dass die Herstellungsvorrichtung als eine Folienanlage und/oder als ein Polymer-Reaktor und/oder als eine Folienextrusionsanlage und/oder als eine Blasfolienanlage und/oder als eine Gießfolienanlage und/oder als eine Flachfolienanlage ausgebildet ist. Alternativ oder zusätzlich ist es vorgesehen, dass die Weiterverarbeitungsvorrichtung als wenigstens eine der nachfolgenden Folienverarbeitungsvorrichtungen ausgebildet ist:
- ein Wickelstretch-Automat,
- ein Haubenstretcher,
- eine Absackanlage, vorzugsweise Form-, Fill- & Seal (FFS) - Absackanlage,
- eine Tiefziehanlage,
- eine Druckmaschine,
- ein Metallisierer,
- eine Umrollmaschine, welche z. B. einen Abwickler und/oder einen Aufwickler aufweist,
- eine Folienanlage,
- eine Laminieranlage,
- eine Kaschieranlage,
- eine Beschichtungsanlage,
- eine Schrumpfhaubenanlage,
- Schrumpftunnel,
- Prüfvorrichtung,
- eine Schrumpf-Verpackungsanlage.

So erfolgt bei der Weiterverarbeitung, d. h. insbesondere auf Anwendungsseite, z. B. ein Einstretchen von Palletten zur Erzielung von Ladungssicherung. Insbesondere dient dabei die Korrelation und/oder das Bewertungsergebnis und/oder ein Optimierungsvorschlag dazu, die Eigenschaften der jeweiligen Folie (der jeweiligen Folienherstellung) optimal auszunutzen, die Prozesssicherheit zu erhöhen und/oder die Anzahl der Abrisse zu verringern.

Es kann von Vorteil sein, wenn im Rahmen der Erfindung wenigstens zwei oder drei oder mehr Weiterverarbeitungsvorrichtungen vorgesehen sind, wobei die Weiterverarbeitungsprozessdaten an jeder der Weiterverarbeitungsvorrichtungen ermittelbar sind, wobei die jeweiligen (ermittelten) Weiterverarbeitungsprozessdaten den jeweiligen Herstellungsprozessdaten, insbesondere anhand eines übergeordneten Identifikators, dauerhaft zuordenbar sind. So kann es z. B. vorgesehen sein, dass bei der Weiterverarbeitung ein Produkt der Folienherstellung mit einem ersten Identifikator weiterverarbeitet wird. Anhand des (ersten) Identifikators können dann z. B. die zugehörigen produktbezogenen und/oder auftragsbezogen (ersten) Herstellungsprozessdaten ausgelesen werden und/oder anhand dieser Herstellungsprozessdaten die Weiterverarbeitung optimiert werden. Das Produkt wird dann bspw. für die Weiterverarbeitung von einer ersten Weiterverarbeitungsvorrichtung verarbeitet, wobei hier erste Weiterverarbeitungsprozessdaten ermittelt und insbesondere dem (ersten) Identifikator zugeordnet werden. Das verarbeitete Produkt wird anschließend bspw. von einer zweiten (der ersten nachgelagerten) Weiterverarbeitungsvorrichtung weiterverarbeitet, wobei hier zweite Weiterverarbeitungsprozessdaten ermittelt und insbesondere dem (ersten) Identifikator zugeordnet werden. Insbesondere wird nach weiteren Prozessschritten am weiterverarbeiteten Produkt das daraus resultierende End-Produkt der Weiterverarbeitung ebenfalls dem (ersten) Identifikator zugeordnet, um z. B. Fehler am End-Produkt den Herstellungsprozessdaten zuordnen zu können. Insbesondere erfolgt bei neuen Prozessabläufen mit anderen Produkten entsprechend eine Zuordnung zu jeweils anderen Identifikatoren.

Es kann insbesondere vorgesehen sein, dass die gleichen Folienprodukte auf gleichen und/oder ähnlichen vergleichbaren und/oder und/oder verschiedenen Weiterverarbeitungsmaschinen verarbeitet werden und/oder durch den Vergleich des Feedbacks dieser Verarbeitungsmaschinen neue Optimierungsvorschläge für den Prozess generiert werden. So können bspw. technische Merkmale für vergleichbare Weiterverarbeitungsmaschinen gesammelt und/oder verglichen und/oder ausgewertet werden, um somit den Einsatz der Maschinen zu optimieren.

Bevorzugt kann im Rahmen der Erfindung vorgesehen sein, dass die Herstellungsvorrichtung und/oder die Weiterverarbeitungsvorrichtung mindestens eine Schnittstellenvorrichtung zur Verbindung mit dem Übertragungssystem, insbesondere einem Netzwerk, aufweist, wobei die Schnittstellenvorrichtung vorzugsweise eine Netzwerk-Schnittstelle und/oder eine Mobilfunkschnittstelle und/oder eine WLAN (Wireless LAN)-Schnittstelle und/oder eine Bluetooth-Schnittstelle und/oder eine RFID (radio-frequency identification) -Schnittstelle umfasst. Insbesondere wird zur Datenübertragung eine Punkt-zu-Punkt Verbindung zwischen einer ersten Vorrichtung (z. B. der Herstellungsvorrichtung und/oder einer ersten Weiterverarbeitungsvorrichtung) und einer zweiten Vorrichtung (z. B. der ersten und/oder zweiten Weiterverarbeitungsvorrichtung) hergestellt. Auch ist es denkbar, dass über die Schnittstelle ein externes Gerät Zugriff auf die ermittelten Prozessdaten und/oder Bewertungsergebnisse und/oder Korrelationen erlangen kann. Somit kann eine vielseitige Auswertung und Datenerfassung erfolgen, um den Prozess weiter zu optimieren.

Ferner ist es denkbar, dass die Herstellungsvorrichtung und/oder die Weiterverarbeitungsvorrichtung eine Einlesevorrichtung umfasst, um einen Identifikator eines Produktes des Prozesses einzulesen, wobei die Einlesevorrichtung vorzugsweise als ein Barcode-Scanner oder ein QR-Code-Scanner oder als ein RFID-Sensor oder als ein NFC (Near Field Communication )-Sensor ausgeführt ist. Alternativ oder zusätzlich ist es vorgesehen, dass sich ein erster Identifikator für ein erstes Produkt der (Folien-) Herstellung in einem ersten Prozess von einem zweiten Identifikator für ein zweites Produkt der (Folien-) Herstellung in einem zweiten Prozess unterscheidet, wobei der jeweilige Identifikator insbesondere innerhalb des gleichen Prozess für die (Folien-) Herstellung und/oder Weiterverarbeitung gleich bleibt. Insbesondere ermöglicht damit der Identifikator eine eindeutige Zuordnung zu einem bestimmten einzelnen Prozess(ablauf) mit einem bestimmten konkreten Produkt (z. B. einer bestimmten Folie). Damit kann eine zuverlässige Zuordnung und Anpassung anhand der Herstellungsprozessdaten für die Weiterverarbeitung erfolgen.

Beispielsweise kann es vorgesehen sein, dass mindestens erste Herstellungsprozessdaten an einer ersten Herstellungsvorrichtung ermittelt werden, und mindestens zweite Herstellungsprozessdaten an einer zweiten Herstellungsvorrichtung ermittelt werden, wobei die Datenübertragung zur Bereitstellung der ersten und/oder zweiten Herstellungsprozessdaten zwischen der ersten Herstellungsvorrichtung und der zweiten Herstellungsvorrichtung durchgeführt wird, um insbesondere eine erste Korrelation zu ermitteln. Insbesondere ist sowohl für die ersten, als auch für die zweiten Herstellungsprozessdaten der gleiche Identifikator (z. B. der gleiche Code) vorgesehen, um eine zuverlässige Zuordnung zu ermöglichen.

Des Weiteren kann es vorgesehen sein, dass mindestens erste Weiterverarbeitungsprozessdaten an einer ersten Weiterverarbeitungsvorrichtung ermittelt werden, und mindestens zweite Weiterverarbeitungsprozessdaten an einer zweiten Weiterverarbeitungsvorrichtung ermittelt werden, wobei die Datenübertragung zur Bereitstellung der ersten und/oder zweiten Weiterverarbeitungsprozessdaten zwischen der ersten Weiterverarbeitungsvorrichtung und der zweiten Weiterverarbeitungsvorrichtung durchgeführt wird, um insbesondere eine zweite Korrelationen zu ermitteln. Somit kann es insbesondere vorgesehen sein, dass Korrelation zwischen unterschiedlichen Weiterverarbeitungsprozessdaten und/oder zwischen unterschiedlichen Herstellungsprozessdaten und/oder zwischen Herstellungsprozess- und Weiterverarbeitungsprozessdaten ermittelt werden. Insbesondere werden die Korrelationen prozessbegleitend ermittelt, d. h. insbesondere nur für solche Prozessdaten ermittelt, welche dem gleichen Prozess angehören (also ein gemeinsames Produkt bzw. voneinander abhängige Zwischenprodukte verarbeitet und/oder hergestellt und/oder genutzt haben). Prozessbegleitend bezieht sich damit insbesondere darauf, dass die einzelnen Zwischenprodukte des begleiteten Prozesses jeweils das Endprodukt des Prozesses beeinflussen.

Es kann weiter möglich sein, dass die Herstellungsvorrichtung und/oder die Weiterverarbeitungsvorrichtung jeweils eine Schnittstellenvorrichtung mit einer SIM-Karte und/oder einer embeddedSIM aufweist. Dabei ist die embeddedSIM insbesondere fest verbaut und/oder unaustauschbar. Dies ermöglicht einen einfachen und kostengünstigen Aufbau der Vorrichtungen.

Ebenfalls Gegenstand der Erfindung ist eine Verarbeitungsvorrichtung, z. B. ein Netzwerk-Server, zur Bewertung mindestens eines industriellen Prozesses zur Folienherstellung einer Folie und/oder Weiterverarbeitung mit der Folie, umfassend:
- eine Schnittstelleneinheit zur Verbindung mit einem Übertragungssystem. Hierbei ist insbesondere vorgesehen, dass durch eine Datenübertragung zumindest Herstellungsprozessdaten und/oder Weiterverarbeitungsprozessdaten über das Übertragungssystem an die Verarbeitungsvorrichtung übertragbar sind,
- eine elektronische Verarbeitungseinheit, durch welche eine Korrelation zwischen den Herstellungsprozessdaten und den Weiterverarbeitungsprozessdaten ermittelbar ist, wobei die Verarbeitungseinheit vorzugsweise als Mikroprozessor und/oder digitaler Signalprozessor ausgeführt ist,
- eine nicht-flüchtige Datenspeichereinheit zur dauerhaften (persistenten) Speicherung der Korrelation (d. h. insbesondere des Ergebnisses der ermittelten Korrelation).

Damit bringt die erfindungsgemäße Verarbeitungsvorrichtung die gleichen Vorteile mit sich, wie sie ausführlich mit Bezug auf ein erfindungsgemäßes Verfahren und/oder ein erfindungsgemäßes System beschrieben worden sind. Zudem kann die Verarbeitungsvorrichtung geeignet sein, gemäß einem erfindungsgemäßen Verfahren und/oder mit einem erfindungsgemäßen System betreibbar zu sein.

Außerdem kann es von Vorteil sein, wenn die Verarbeitungsvorrichtung, insbesondere die Datenspeichereinheit, einen, insbesondere verschlüsselten, vorrichtungsspezifischen Identifikator aufweist, sodass durch einen Vergleich des vorrichtungsspezifischen Identifikators mit einem Gegenidentifikator einer jeweiligen Vorrichtung des Prozesses eine Authentifizierung der Vorrichtung an der Verarbeitungsvorrichtung durchführbar ist, insbesondere derart, dass nur bei einem positiven Authentifizierung eine Datenverbindung und/oder Bereitstellung der Korrelation und/oder der Herstellungsprozessdaten und/oder der Weiterverarbeitungsprozessdaten erfolgt. Insbesondere wird dabei der Gegenidentifikator durch z. B. eine SIM (subscriber identity module) bereitgestellt. Somit ist ein zuverlässiger und sicherer Betreib des Prozess möglich.

Ferner ist erfindungsgemäß vorgesehen , dass die Verarbeitungsvorrichtung als eine zentrale Verarbeitungsvorrichtung ausgeführt ist, und insbesondere gemäß einem erfindungsgemäßen Verfahren derart betreibbar ist, dass eine Datenkommunikation mit zumindest einer oder jeder der Vorrichtungen des erfindungsgemäßen Systems durchführbar ist.

Ebenfalls Gegenstand der Erfindung ist ein Computerprogrammprodukt zur Bewertung mindestens eines industriellen Prozesses zur Folienherstellung einer Folie und/oder Weiterverarbeitung mit der Folie. Hierbei ist vorgesehen, dass das Computerprogrammprodukt derart ausgestaltet ist, dass ein erfindungsgemäßes Verfahren betreibbar ist. Damit bringt das erfindungsgemäße Computerprogrammprodukt die gleichen Vorteile mit sich, wie sie ausführlich mit Bezug auf ein erfindungsgemäßes Verfahren und/oder ein erfindungsgemäßes System und/oder eine erfindungsgemäße Verarbeitungsvorrichtung beschrieben worden sind.

In einer weiteren Möglichkeit kann vorgesehen sein, dass das Computerprogrammprodukt als ERP-System und/oder als internet- und/oder netzwerk-basierte Plattform und/oder als Firmware oder Steuerungssoftware für zumindest eine Vorrichtung des Prozesses und/oder als Internetanwendung und/oder als eine Internetseite und/oder als eine über ein Netzwerk bedienbare Applikation ausgeführt ist. Hierdurch ergeben sich kostengünstige und flexible Möglichkeiten zur Optimierung des Prozesses. Das Computerprogrammprodukt ist dabei insbesondere derartig gestaltet, dass verschiedene Betreiber und/oder Bediener von Herstellungs- und Weiterverarbeitungsmaschinen mithilfe des Computerprogrammproduktes sicheren bi- und/oder multilateralen Datenaustausch mit unterschiedlichen Berechtigungsebenen realisieren können. Das Computerprogramm erlaubt vorzugsweise sowohl die Nutzung vorgefertigter Korrelationsfunktionen, als auch die Erstellung und Weiterentwicklung spezifischer bi- oder multilateraler und/oder proprietärer Korrelationen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung eines erfindungsgemäßen Systems,
- Fig. 2: eine schematische Darstellung zur Visualisierung eines erfindungsgemäßen Verfahrens,
- Fig. 3: eine weitere schematische Darstellung zur Visualisierung eines erfindungsgemäßen Verfahrens,
- Fig. 4: eine weitere schematische Darstellung eines erfindungsgemäßen Systems,
- Fig. 5: eine weitere schematische Darstellung eines erfindungsgemäßen Systems.

In den nachfolgenden Figuren werden für die gleichen technischen Merkmale auch von unterschiedlichen Ausführungsbeispielen die identischen Bezugszeichen verwendet.

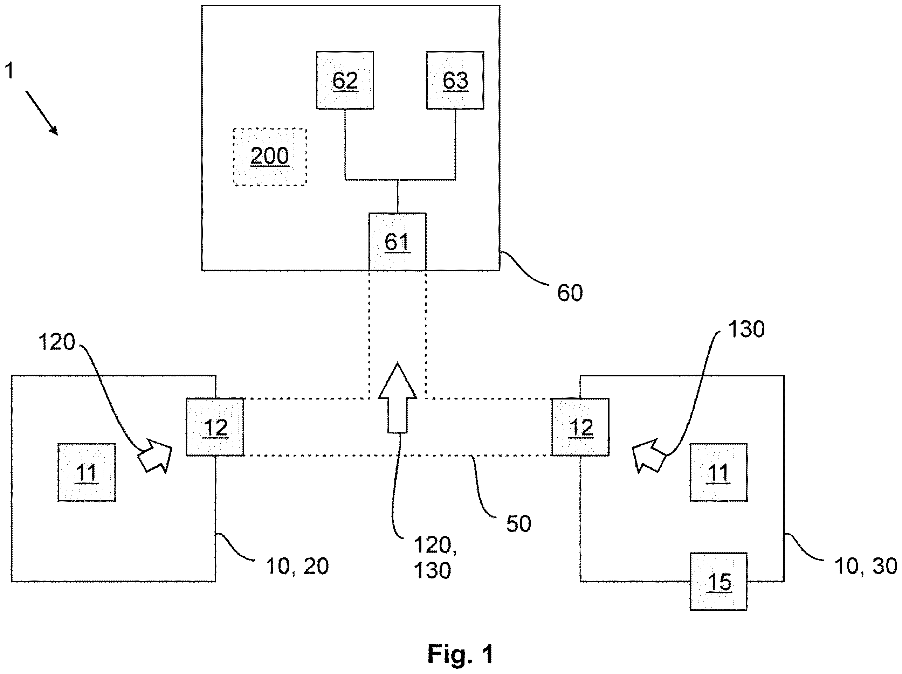

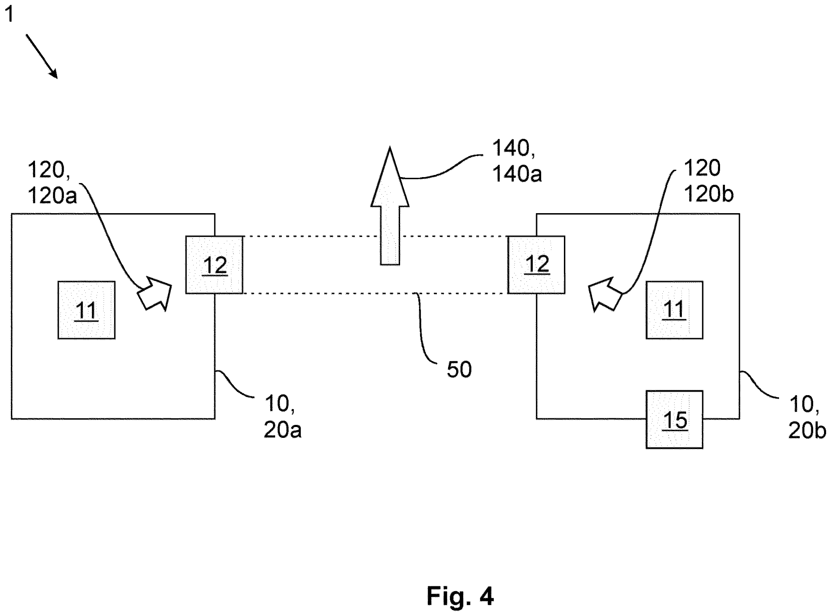

In Figur 1 ist schematisch ein erfindungsgemäßes System 1 gezeigt, welches zur Bewertung mindestens eines industriellen Prozesses zur Folienherstellung einer Folie und/oder Weiterverarbeitung mit der Folie dient. Das erfindungsgemäße System 1 und/oder der gesamte Prozess umfassen dabei ein oder mehrere Herstellungsvorrichtungen 20 und/oder ein oder mehrere Weiterverarbeitungsvorrichtungen 30. So ist beispielhaft in Figur 4 dargestellt, dass ein erster Teilprozess des gesamten Prozesses eine erste Herstellungsvorrichtung 20a und eine zweite Herstellungsvorrichtung 20b für die Folienherstellung umfassen kann. Ebenso kann ein zweiter Teilprozess des gesamten Prozesses eine erste Weiterverarbeitungsvorrichtung 30a und eine zweite Weiterverarbeitungsvorrichtung 30b für die Weiterverarbeitung aufweisen. Der erste Teilprozess umfasst dabei z. B. die Herstellung von einer oder mehreren Folien durch die mindestens eine Herstellungsvorrichtung 20 und der zweite Teilprozess umfasst z. B. die Weiterverarbeitung dieser Folien durch die mindestens eine Weiterverarbeitungsvorrichtung 30. Dabei kann es vorgesehen sein, dass zunächst eine Herstellung von z. B. mehreren Folien erfolgt, wobei für die Weiterverarbeitung nur bestimmte Folien ausgewählt und zur Weiterverarbeitung genutzt werden.

In Figur 1 ist ferner dargestellt, dass die Herstellungs- und/oder Weiterverarbeitungsvorrichtungen 20, 30 jeweils als erfindungsgemäße Vorrichtung 10 ausgeführt sein können. Mit anderen Worten kann jede der Herstellungs- und/oder Weiterverarbeitungsvorrichtungen 20, 30 zum Beispiel eine Schnittstellenvorrichtung 12 und/oder einen oder mehrerer Sensor(en) 11 und/oder eine Einlesevorrichtung 15 aufweisen.

Bei der Herstellung werden Herstellungsprozessdaten 120 z. B. durch eine Erfassung zumindest eines Prozessparameters an der mindestens einen Herstellungsvorrichtung 20 ermittelt, insbesondere durch den Sensor 11 der jeweiligen Herstellungsvorrichtung 20.

Bei der Weiterverarbeitung werden Weiterverarbeitungsprozessdaten 130 insbesondere durch eine Erfassung zumindest eines Prozessparameters an der mindestens einen Weiterverarbeitungsvorrichtung 30 ermittelt, vorzugsweise durch den Sensor 11 der jeweiligen Weiterverarbeitungsvorrichtung 30.

Die ermittelten Herstellungs- und Weiterverarbeitungsprozessdaten 120, 130 werden anschließend, insbesondere über die Schnittstellenvorrichtung 12, bereitgestellt. Die Schnittstellenvorrichtung 12 ist hierzu z. B. mit einem Übertragungssystem 50, wie einem Netzwerk, verbunden. Es erfolgt insbesondere eine Datenübertragung der ermittelten Herstellungs- und/oder Weiterverarbeitungsprozessdaten 120, 130 über das Übertragungssystem 50, wobei die Datenübertragung in zumindest einer der folgenden Datenübertragungsarten erfolgen kann:
- zwischen der mindestens einen Vorrichtung 10 der Folienherstellung und der mindestens einen Vorrichtung 10 der Weiterverarbeitung,
- zwischen verschiedenen Vorrichtungen 10 der Folienherstellung,
- zwischen verschiedenen Vorrichtungen 10 der Weiterverarbeitung,
- zwischen der mindestens einen Vorrichtung 10 der Folienherstellung (d. h. der Herstellungsvorrichtung 20) und einer zentralen Verarbeitungsvorrichtung 60,
- zwischen der mindestens einen Vorrichtung 10 der Weiterverarbeitung (d. h. der Weiterverarbeitungsvorrichtung 30) und der zentralen Verarbeitungsvorrichtung 60.

Die Bereitstellung dient dabei vorrangig dazu, eine weitere Auswertung der ermittelten Prozessdaten (d. h. der Herstellungs- und Weiterverarbeitungsprozessdaten 120, 130) durchführen zu können. Die Auswertung kann dabei in einer erfindungsgemäßen Verarbeitungsvorrichtung 60 durchgeführt werden, welche z. B. zentral und/oder bei der Folienherstellung und/oder bei der Weiterverarbeitung angeordnet ist. Es ist auch denkbar, dass die Verarbeitungsvorrichtung 60 in einer Herstellungsvorrichtung 20 und/oder einer Weiterverarbeitungsvorrichtung 30 integriert ist. Die Verarbeitungsvorrichtung 60 umfasst insbesondere eine Schnittstelleneinheit 61 zur Verbindung mit dem Übertragungssystem 50, eine Datenspeichereinheit 63 bspw. zur Speicherung der ermittelten Prozessdaten, und/oder eine Verarbeitungseinheit 62, welche z. B. als Mikroprozessor oder dergleichen arithmetische Operationen zur Durchführung der Auswertung und/oder Korrelation durchführen kann. Weiter kann die Verarbeitungsvorrichtung 60 ein erfindungsgemäßes Computerprogrammprodukt 200 aufweisen und/oder ausführen, welches zur Durchführung eines erfindungsgemäßen Verfahrens 100 geeignet ist.

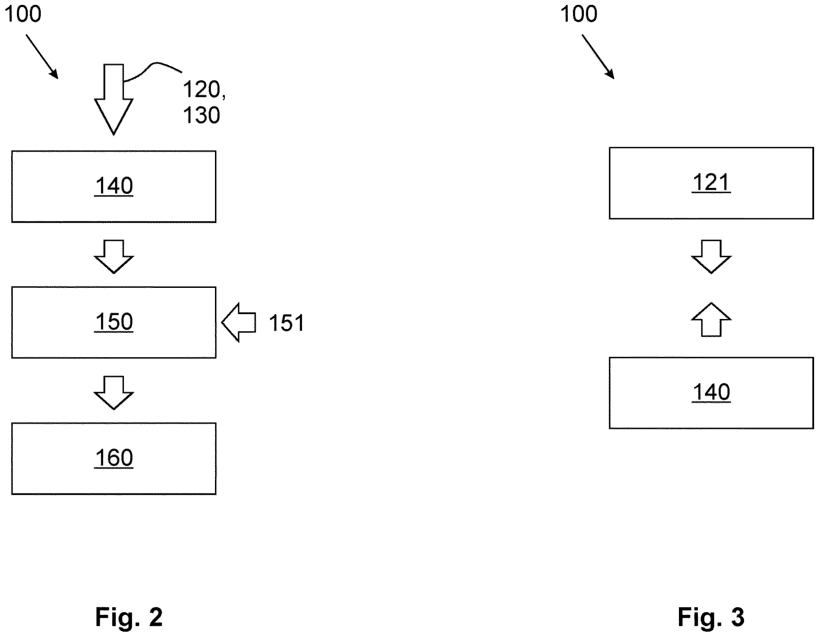

Bei der Auswertung erfolgt, wie in Figur 2 gezeigt, insbesondere die Ermittlung einer Korrelation 140 zwischen den Herstellungsprozessdaten 120 und den Weiterverarbeitungsprozessdaten 130. Dabei wird mindestens ein Bewertungskriterium 151 ausgewertet, z. B. mit der Korrelation 140 verglichen, sodass ein Bewertungsergebnis 150 bestimmt wird. Das Bewertungskriterium 151 ist bspw. ein vordefinierter Wertebereich, welches eine Soll-Anforderung vorgibt. Die Korrelation 140 wird bspw. durch numerische Operationen, z. B. durch eine Regressionsanalyse, durchgeführt, wobei insbesondere durch die Korrelation 140 die Weiterverarbeitungsprozessdaten 130 mit den Herstellungsprozessdaten 120 verglichen werden. Als ein einfacher der Fall der Korrelation und Bewertung kann z. B. ein Vergleich der Weiterverarbeitungsprozessdaten 130 mit der Soll-Anforderung dienen, welche z. B. durch die Herstellungsprozessdaten 120 vorgegeben ist. Eine weitere Möglichkeit der Korrelation 140 ist z. B. eine Mustererkennung und/oder eine Nutzung neuronaler Netzwerke und/oder eine Modellanpassung anhand der Weiterverarbeitungsprozessdaten 130.

Wenn bereits die Korrelation 140 der Herstellungsprozessdaten 120 mit den Weiterverarbeitungsprozessdaten 130 ermittelt wurde, so kann diese und/oder das hierbei entstandene Bewertungsergebnis 150 genutzt werden, um eine Prognose für weitere (neu ermittelte) Herstellungsprozessdaten 121 durchzuführen. So ist z. B. in Figur 3 gezeigt, dass mittels der Korrelation 140 auch eine Prognose und/oder Prädiktion der zu erwartenden Ergebnisse der Weiterverarbeitung erfolgen kann, wenn hierzu die ermittelten weiteren Herstellungsprozessdaten 121 (z. B. modellbasiert) ausgewertet werden. Die hierzu genutzte Berechnungsgrundlage, z. B ein Modell, wird bspw. durch die Korrelation 140 der Herstellungsprozessdaten 120 und der (bereits zuvor ermittelten) Weiterverarbeitungsprozessdaten 130 optimiert und angepasst. Hierdurch wird dann bspw. eine Vorhersage möglich, welches Ergebnis bei der Weiterverarbeitung zu erwarten ist, wenn die Folie der Folienherstellung, bei welcher die weiteren Herstellungsprozessdaten 121 ermittelt wurden, bei der Weiterverarbeitung genutzt wird.

Das Bewertungsergebnis 150 kann anschließend bereitgestellt werden, z. B. indem es in eine Internetseite integriert wird, welche z. B. durch die zentrale Verarbeitungsvorrichtung 60 (als Server) generiert wird. Auch kann zur Bereitstellung eine Datenübertragung des Bewertungsergebnisses 150, z. B. über das Übertragungssystem 50, möglich sein.

Die in Figur 1 gezeigte Einlesevorrichtung 15 dient insbesondere dazu, um einen Identifikator eines Produktes des Prozesses einzulesen. Durch den Identifikator kann eine eindeutige Zuordnung, insbesondere der Herstellungsprozessdaten 120 und/oder der Weiterverarbeitungsprozessdaten 130 zu einem Produkt und/oder Ergebnis erfolgen, welches durch den jeweiligen (Teil-) Prozess verarbeitet wurde. Dies erlaubt zum Beispiel eine produktbezogene und/oder auftragsbezogene Bereitstellung mithilfe des Identifikators. Bei der Datenübertragung werden dann z. B. die Herstellungsprozessdaten 120 produktbezogen und/oder auftragsbezogen für ein jeweiliges Produkt der Folienherstellung bereitgestellt und/oder dauerhaft gespeichert. Auch kann es möglich sein, dass als Voraussetzung für die Bereitstellung der Weiterverarbeitungsprozessdaten 130 und/oder des Bewertungsergebnisses 150 der Identifikator zuvor an die Verarbeitungsvorrichtung 60 übertragen werden muss.

Es ist ferner denkbar, dass zunächst bei der Folienherstellung den hierbei ermittelten Herstellungsprozessdaten 120 ein bestimmter (z. B. eindeutiger) Identifikator zugewiesen wird und der Identifikator und/oder die Herstellungsprozessdaten 120 an die Verarbeitungsvorrichtung 60 übertragen (bereitgestellt) werden. Weiter kann, z. B. zeitlich versetzt (insbesondere auch nach einigen Tagen / Wochen / Monaten) die Weiterverarbeitung mit der durch die Folienherstellung hergestellten Folie erfolgen. Bei der Weiterverarbeitung können dann die dabei ermittelten Weiterverarbeitungsprozessdaten 130 an die Verarbeitungsvorrichtung 60 zur Bereitstellung übertragen werden und/oder, z. B. anhand des Identifikators, eine Zuordnung der ermittelten Weiterverarbeitungsprozessdaten 130 zu den entsprechenden Herstellungsprozessdaten 120 erfolgen. Auch ist es denkbar, dass die Weiterverarbeitung zumindest teilweise anhand des Identifikators parametrisiert wird.

Vorzugsweise können die produktbezogenen und/oder auftragsbezogenen Herstellungsprozessdaten 120 über das Übertragungssystem 50, insbesondere über eine Kommunikations- und/oder Internetverbindung, an die zentrale Verarbeitungsvorrichtung 60 übertragen werden. Dabei erfolgt insbesondere ein Auswählen 160 der für die Weiterverarbeitung relevanten Herstellungsprozessdaten 120, z. B. durch eine Vorgabe, welche Art von Herstellungsprozessdaten 120 berücksichtigt werden sollen. Dies ist z. B. in Figur 2 schematisch dargestellt. Weiter kann es möglich sein, dass die hieraus resultierende Auswahl 160 für die Weiterverarbeitung bereitgestellt wird, z. B. über eine Internetseite oder als mindestens eine herunterladbare Datei. Die bereitgestellte Auswahl 160 kann dann zum Beispiel genutzt werden, um die Weiteverarbeitung anzupassen, bspw. um die Parameter der mindestens einen Weiterverarbeitungsvorrichtung 30 anzupassen.

Weiter ist es auch denkbar, dass auch weitere Korrelationen 140 ermittelt werden. So können z. B., wie in Figur 4 gezeigt ist, mindestens erste Herstellungsprozessdaten 120a an einer ersten Herstellungsvorrichtung 20a ermittelt werden, und mindestens zweite Herstellungsprozessdaten 120b an einer zweiten Herstellungsvorrichtung 20b ermittelt werden. Dabei kann insbesondere die Datenübertragung zur Bereitstellung der ersten und/oder zweiten Herstellungsprozessdaten 120a, 120b zwischen der ersten Herstellungsvorrichtung 20a und der zweiten Herstellungsvorrichtung 20b durchgeführt werden. Alternativ oder zusätzlich kann die Datenübertragung auch zu einer zentralen Verarbeitungsvorrichtung 60 erfolgen. Durch eine zentrale Verarbeitungsvorrichtung 60 und/oder durch weitere Verarbeitungsvorrichtungen 60, welche z. B. in der ersten und/oder zweiten Herstellungsvorrichtung 20a, 20b integriert sind, kann dann eine erste Korrelation 140a ermittelt werden.

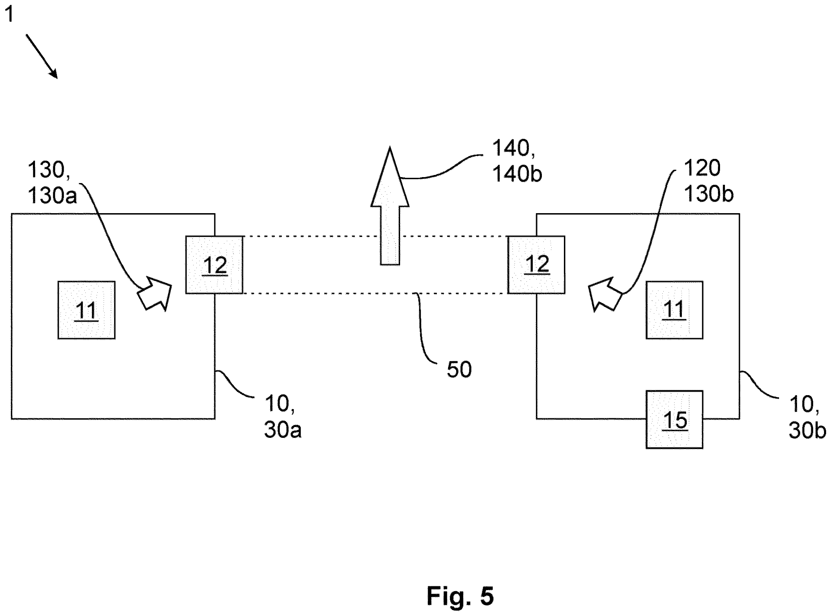

In Figur 5 ist dargestellt, dass auch mindestens erste Weiterverarbeitungsprozessdaten 130a an einer ersten Weiterverarbeitungsvorrichtung 30a ermittelt werden können, und mindestens zweite Weiterverarbeitungsprozessdaten 130b an einer zweiten Weiterverarbeitungsvorrichtung 30b ermittelt werden können. Dabei kann die Datenübertragung zur Bereitstellung der ersten und/oder zweiten Weiterverarbeitungsprozessdaten 130a, 130b zwischen der ersten Weiterverarbeitungsvorrichtung 30a und der zweiten Weiterverarbeitungsvorrichtung 30b und/oder der zentralen Verarbeitungsvorrichtung 60 durchgeführt werden, um insbesondere eine zweite Korrelation 140b zu ermitteln.

Die erste Korrelation 140a ermöglicht dabei z. B. eine Optimierung und/oder Bewertung innerhalb des ersten Teilprozesses und die zweite Korrelation 140b ermöglicht insbesondere eine Optimierung und/oder Bewertung innerhalb des zweiten Teilprozesses. Dabei ist es möglich, dass diese Optimierung automatisiert erfolgt. Z. B. die Herstellung einer ersten und/oder zweiten Herstellungsvorrichtung 20a, 20b kann dadurch optimiert werden, dass die erste Korrelation 140a ausgewertet wird, und/oder die Verarbeitung einer ersten und/oder zweiten Weiterverarbeitungsvorrichtung 30a, 30b kann dadurch optimiert werden, dass die zweite Korrelation 140b ausgewertet wird.

### Bezugszeichenliste

- 1: System

- 10: Vorrichtung
- 11: Sensor
- 12: Schnittstellenvorrichtung
- 15: Einlesevorrichtung

- 20: Herstellungsvorrichtung

- 20a: erste Herstellungsvorrichtung
- 20b: zweite Herstellungsvorrichtung

- 30: Weiterverarbeitungsvorrichtung

- 30a: erste Weiterverarbeitungsvorrichtung
- 30b: zweite Weiterverarbeitungsvorrichtung

- 50: Übertragungssystem

- 60: Verarbeitungsvorrichtung
- 61: Schnittstelleneinheit
- 62: Verarbeitungseinheit
- 63: Datenspeichereinheit

- 100: Verfahren

- 120: Herstellungsprozessdaten

- 120a: erste Herstellungsprozessdaten
- 120b: zweite Herstellungsprozessdaten
- 121: weitere Herstellungsprozessdaten

- 130: Weiterverarbeitungsprozessdaten

- 130a: erste Weiterverarbeitungsprozessdaten
- 130b: zweite Weiterverarbeitungsprozessdaten

- 140: Korrelation

- 140a: erste Korrelation
- 140b: zweite Korrelation
- 150: Bewertungsergebnis
- 151: Bewertungskriterium

- 160: Auswahl

- 200: Computerprogrammprodukt

## Patentansprüche

1. Verfahren (100) zur Bewertung mindestens eines industriellen Prozesses zur Folienherstellung einer Folie, insbesondere einer Kunststofffolie, und/oder Weiterverarbeitung mit der Folie, mit
wenigstens einer Herstellungsvorrichtung (20), welche zur Folienherstellung der Folie betrieben wird, und
wenigstens einer Weiterverarbeitungsvorrichtung (30), welche zur Weiterverarbeitung mit der Folie betrieben wird,
**dadurch gekennzeichnet,**
**dass** die nachfolgenden Schritte prozessbegleitend durchgeführt werden:
- Ermitteln von Herstellungsprozessdaten (120) an der Herstellungsvorrichtung (20) bei der Folienherstellung,
- Ermitteln von Weiterverarbeitungsprozessdaten (130) an der Weiterverarbeitungsvorrichtung (30) bei der Weiterverarbeitung,
- Durchführen einer Datenübertragung zur Bereitstellung der Herstellungsprozessdaten (120) und/oder der Weiterverarbeitungsprozessdaten (130),
- Ermitteln einer Korrelation (140) zwischen den Herstellungsprozessdaten (120) und den Weiterverarbeitungsprozessdaten (130), wobei mindestens ein Bewertungskriterium (151) ausgewertet wird, sodass ein Bewertungsergebnis (150) bestimmt wird,
- Bereitstellen des Bewertungsergebnisses (150) und/oder der Herstellungsprozessdaten (120) und/oder der Weiterverarbeitungsprozessdaten (130),
wobei die mindestens eine Herstellungsvorrichtung (20) unabhängig und räumlich getrennt von der mindestens einen Weiterverarbeitungsvorrichtung (30) angeordnet ist, wobei bei der Datenübertragung die Herstellungsprozessdaten (120) produktbezogen und/oder auftragsbezogen für ein jeweiliges Produkt der Folienherstellung bereitgestellt und/oder dauerhaft gespeichert werden, wobei die produktbezogenen und/oder auftragsbezogen Herstellungsprozessdaten (120) über eine Internetverbindung an eine zentrale Verarbeitungsvorrichtung (60) übertragen werden.

2. Verfahren (100) nach Anspruch 1,
**dadurch gekennzeichnet,**
**dass** die nachfolgenden Schritte vorgesehen sind:
- Auswählen der für die Weiterverarbeitung relevanten Herstellungsprozessdaten (120) und/oder der Korrelation (140) und/oder des Bewertungsergebnisses (150), sodass eine Auswahl (160) bestimmt wird,
- Bereitstellen der Auswahl (160) für die Weiterverarbeitung,
- Anpassen der Weiterverarbeitung anhand der Auswahl (160).

3. Verfahren (100) nach Anspruch 1 oder 2,
**dadurch gekennzeichnet,**
**dass** die Datenübertragung als ein automatisierter Datenaustausch erfolgt, wobei der Datenaustausch derart durchgeführt wird, dass die Herstellungsprozessdaten (120) zumindest teilweise an die Weiterverarbeitungsvorrichtung (30) übertragen werden, und insbesondere die Weiterverarbeitungsprozessdaten (130) zumindest teilweise an die Herstellungsvorrichtung (20) übertragen werden, bevorzugt über eine Kommunikations- und/oder Internetverbindung.

4. Verfahren (100) nach einem der vorhergehenden Ansprüche,
**dadurch gekennzeichnet,**
**dass** die Datenübertragung derart durchgeführt wird, dass die Herstellungsprozessdaten (120) und/oder die Weiterverarbeitungsprozessdaten (130) zumindest teilweise an eine zentrale Verarbeitungsvorrichtung (60) übertragen werden, bevorzugt über eine Kommunikations- und/oder Internetverbindung, wobei besonders bevorzugt die Verarbeitungsvorrichtung (60) anschließend die Korrelation (140) ermittelt und/oder die übertragenen Herstellungs- und/oder Weiterverarbeitungsprozessdaten (120, 130) und/oder die Korrelation (140) über die Kommunikations- und/oder Internetverbindung zur weiteren Auswertung bereitstellt, insbesondere über eine Internetseite und/oder eine über ein Netzwerk bedienbare Applikation.

5. Verfahren (100) nach einem der vorhergehenden Ansprüche,
**dadurch gekennzeichnet,**
**dass** die Datenübertragung anhand eines den Herstellungsprozessdaten (120) und/oder Weiterverarbeitungsprozessdaten (130) dauerhaft zugeordneten Identifikators, insbesondere eines maschinenlesbaren und/oder QR-Codes, erfolgt, welcher vorzugsweise an einem Produkt des Prozesses befestigt wird.

6. Verfahren (100) nach einem der vorhergehenden Ansprüche,
**dadurch gekennzeichnet,**
**dass** die Datenübertragung während der Folienherstellung und/oder Weiterverarbeitung, insbesondere prozessbegleitend im Hintergrund, vorzugsweise zyklisch und/oder ereignis-getriggert, zwischen ein oder mehreren Weiterverarbeitungsvorrichtungen (30) und/oder ein oder mehreren Herstellungsvorrichtungen (20) erfolgt.

7. Verfahren (100) nach einem der vorhergehenden Ansprüche,
**dadurch gekennzeichnet,**
**dass** der Prozess, insbesondere die Folienherstellung und/oder die Weiterverarbeitung, ein oder mehrere Herstellungs- und/oder Weiterverarbeitungsvorrichtungen (20, 30) umfasst, wobei an den jeweiligen Herstellungs- und/oder Weiterverarbeitungsvorrichtungen (20, 30) jeweils zugeordnete Herstellungs- und/oder Weiterverarbeitungsprozessdaten (120, 130) ermittelt werden, wobei prozessbegleitend ein oder mehrere Korrelationen (140) für jeweils unterschiedliche der jeweils zugeordneten Herstellungs- und/oder Weiterverarbeitungsprozessdaten (120, 130) ermittelt werden, sodass insbesondere die Folienherstellung und/oder Weiterverarbeitung anhand der Korrelation, insbesondere prozessbegleitend und/oder im Hintergrund, gesteuert und/oder angepasst wird.

8. Verfahren (100) nach einem der vorhergehenden Ansprüche,
**dadurch gekennzeichnet,**
**dass** das Bewertungsergebnis (150) zumindest eine der nachfolgenden Informationen aufweist, welche vorzugsweise zumindest einer Vorrichtung (10) des Prozesses zugeordnet wird und/oder aus den Herstellungsprozessdaten (120) und/oder den Weiterverarbeitungsprozessdaten (130) ermittelt wird:
- zumindest eine Leistungskennzahl der zumindest einen Vorrichtung (10) des Prozesses, insbesondere der Herstellungsvorrichtung (20) und/oder der Weiterverarbeitungsvorrichtung (30),
- zumindest ein Hinweis über Wartungsarbeiten,
- zumindest eine Verarbeitungsgeschwindigkeit,
- zumindest eine mechanische und/oder optische Eigenschaft der Folie,
- zumindest eine Folienrezeptur für die Folienherstellung und/oder Weiterverarbeitung,
- zumindest eine Schwankungsbreite der Kräfte und/oder Momente bei der Folienherstellung und/oder Weiterverarbeitung,
- Hinweise und/oder Parameter und/oder Optimierungsvorschläge für die Weiterverarbeitung und/oder die Folienherstellung,
- Informationen über einen der Folienherstellung vorgelagerten Prozessbaustein und/oder einem Rohstoff der Weiterverarbeitung und/oder Folienherstellung,
wobei das Bewertungsergebnis (150) zumindest teilweise einem Folienhersteller und/oder einem Folienweiterverarbeiter, insbesondere über ein Netzwerk, vorzugsweise durch eine Internetplattform, bereitgestellt wird, wobei insbesondere
anhand des Bewertungsergebnisses (150) und/oder der Korrelation (140) der Prozessbaustein bewertet wird, welcher der Folienherstellung vorgelagert ist, sodass insbesondere der Rohstoff für die Weiterverarbeitung identifiziert und/oder beurteilt wird.

9. Verfahren (100) nach einem der vorhergehenden Ansprüche,
**dadurch gekennzeichnet,**
**dass** die Herstellungsprozessdaten (120) und/oder die Weiterverarbeitungsprozessdaten (130) zumindest eine der nachfolgenden Informationen umfassen, welche vorzugsweise durch mindestens einen Sensor (11) bei einer Vorrichtung (10) des Prozesses ermittelt werden:
- zumindest eine Angabe über einen Zusammenhang zwischen Spannung und Dehnung bei der Folie,
- zumindest eine Angabe über Abwickelkräfte bei der Folie,
- eine Anzahl der Abrisse bei der Weiterverarbeitung,
- eine Anzahl und/oder ein Typ eines Produktes der Weiterverarbeitung oder eines weiteren Prozesses, insbesondere einer verpackten Palette,
- einen gemessenen Kraftwert und/oder ein Drehmoment bei der Vorrichtung (10),
- einen Temperaturwert, welcher bei der Vorrichtung (10) erfasst wurde,
- eine Folienrezeptur für die Folienherstellung und/oder Weiterverarbeitung,
- optische und/oder akustische Informationen, welche insbesondere bei der Vorrichtung (10) erfasst wurden,
- Fehler oder Warnungen, insbesondere Fehlermeldungen der Vorrichtung (10) und/oder Datenübertragungsfehler,
- eine Anzahl von erfolgten Weiterverarbeitungsschritten mit der Folie.

10. Verfahren (100) nach einem der vorhergehenden Ansprüche,
**dadurch gekennzeichnet,**
**dass** die Weiterverarbeitungsprozessdaten (130) durch eine Erfassung zumindest einer der folgenden Prozessparameter an der mindestens einen Weiterverarbeitungsvorrichtung (30), insbesondere durch einen Sensor (11) der jeweiligen Weiterverarbeitungsvorrichtung (30), ermittelt werden:
- mechanische Eigenschaften der Folie, wobei vorzugsweise die Folie als eine Stretchfolie ausgeführt ist,
- Reibwerte der Folie, wobei vorzugsweise die Folie als eine FFS Folie ausgeführt ist,
- Verformungskräfte und/oder Bogenlauf der Folie, wobei vorzugsweise die Folie als eine Tiefziehfolie ausgeführt ist,
- Parameter eines E-Moduls und/oder Defekte der Folie und/oder Wickelparameter und/oder Abwickelkräfte und/oder Bogenlauf, wobei vorzugsweise die Folie als eine bedruckte Folie ausgeführt ist,
- Abwickelkräfte der Folie und/oder Bogenlauf, wobei vorzugsweise die Folie als eine Metallisierfolie ausgeführt ist,
- das Siegelverhalten der verwendeten Folie.

11. Verfahren (100) nach einem der vorhergehenden Ansprüche,
**dadurch gekennzeichnet,**
**dass** das Bewertungskriterium (151) eine Folienrezeptur und/oder eine folienbezogene Vorgabe, vorzugsweise mit vordefinierten Folieneigenschaften, und/oder mindestens einen Fertigungsparameter der Herstellungsvorrichtung (20) und/oder eine Vorgabe der Weiterverarbeitungsvorrichtung (30) für die Folie aufweist.

12. Verfahren (100) nach einem der vorhergehenden Ansprüche,
**dadurch gekennzeichnet,**
**dass** die Korrelation (140) anhand eines Prozessmodells ermittelt wird, wobei vorzugsweise eine lernfähige und/oder prädiktive Auswertung der Herstellungsprozessdaten (120) und/oder der Weiterverarbeitungsprozessdaten (130) durchgeführt wird.

13. Verfahren (100) nach einem der vorhergehenden Ansprüche,
**dadurch gekennzeichnet,**
**dass** bei einer Auswahl von weiteren Herstellungsprozessdaten (121), welche für eine den weiteren Herstellungsprozessdaten (121) zugeordnete Folie ermittelt sind, prädiktiv in Abhängigkeit von diesen weiteren Herstellungsprozessdaten (121) anhand von mindestens einer zuvor ermittelten Korrelation (140) ein voraussichtliches Ergebnis der Weiterverarbeitung der zugeordneten Folie und/oder ein voraussichtliches Verhalten der zugeordneten Folie in der Weiterverarbeitung vorhergesagt wird.

14. Verfahren (100) nach einem der vorhergehenden Ansprüche,
**dadurch gekennzeichnet,**
**dass** die Korrelation (140) dadurch ermittelt wird, dass eine Auswertung der ermittelten Herstellungsprozessdaten (120) und der ermittelten Weiterverarbeitungsprozessdaten (130)
- durch die Weiterverarbeitungsvorrichtung (30), und/oder
- durch die Herstellungsvorrichtung (20), und/oder
- durch eine zentrale Verarbeitungsvorrichtung (60), insbesondere durch ein ERP-System (1) und/oder durch einen Netzwerk- und/oder Internet-Server, erfolgt.

15. Verfahren (100) nach einem der vorhergehenden Ansprüche,
**dadurch gekennzeichnet,**
**dass** die Korrelation (140) dadurch ermittelt wird, dass eine statistische Auswertung, vorzugsweise eine Regressionsanalyse, durchgeführt wird, wobei die Regressionsfunktion anhand der ermittelten Herstellungsprozessdaten (120) und/oder den Weiterverarbeitungsprozessdaten (130) geschätzt wird.

16. Verfahren (100) nach einem der vorhergehenden Ansprüche,
**dadurch gekennzeichnet,**
**dass** die Korrelation (140) dadurch ermittelt wird, dass eine Mustererkennung durchgeführt wird, vorzugsweise durch eine syntaktische und/oder statistische und/oder strukturelle Mustererkennung, wobei bevorzugt die nachfolgenden Schritte vorgesehen sind:
- Vorverarbeitung der ermittelten Herstellungsprozessdaten (120) und/oder Weiterverarbeitungsprozessdaten (130), insbesondere durch Filterung, vorzugsweise sodass ein Rauschen und/oder Ausreißer der Daten reduziert wird,
- Gewinnen von Merkmalen und/oder Reduzieren von Merkmalen, insbesondere durch eine Transformation und/oder durch eine Varianzanalyse,
- Klassifizierung der Merkmale, insbesondere in Klassen, wobei bevorzugt das Bewertungskriterium (151) die Klassen definiert.

17. System (1) zur Bewertung mindestens eines industriellen Prozesses zur Folienherstellung einer Folie, insbesondere einer Kunststofffolie, und/oder Weiterverarbeitung mit der Folie, umfassend:
- mindestens eine Herstellungsvorrichtung (20) zur Folienherstellung der Folie,
- mindestens eine Weiterverarbeitungsvorrichtung (30) zur Weiterverarbeitung mit der Folie,
**dadurch gekennzeichnet,**
**dass** für eine Datenübertragung ein Übertragungssystem (50) mit der Herstellungsvorrichtung (20) und der Weiterverarbeitungsvorrichtung (30) verbunden ist, sodass Herstellungsprozessdaten (120) der Herstellungsvorrichtung (20) und Weiterverarbeitungsprozessdaten (130) der Weiterverarbeitungsvorrichtung (30) bereitstellbar und zur Ermittlung einer Korrelation (140) auswertbar sind, wobei anhand der Korrelation (140) ein Bewertungsergebnis (150) bestimmbar ist, wobei die mindestens eine Herstellungsvorrichtung (20) unabhängig und räumlich getrennt von der mindestens einen Weiterverarbeitungsvorrichtung (30) angeordnet ist, wobei bei der Datenübertragung die Herstellungsprozessdaten (120) produktbezogen und/oder auftragsbezogen für ein jeweiliges Produkt der Folienherstellung bereitgestellt und/oder dauerhaft gespeichert werden, wobei die produktbezogenen und/oder auftragsbezogen Herstellungsprozessdaten (120) über eine Internetverbindung an eine zentrale Verarbeitungsvorrichtung (60) übertragen werden.

18. System (1) nach Anspruch 17,
**dadurch gekennzeichnet,**
**dass** die Herstellungsvorrichtung (20) als eine Folienanlage und/oder als ein Polymer-Reaktor und/oder als eine Folienextrusionsanlage und/oder als eine Blasfolienanlage und/oder als eine Gießfolienanlage ausgebildet ist.

19. System (1) nach Anspruch 17 oder 18,
**dadurch gekennzeichnet,**
**dass** die Weiterverarbeitungsvorrichtung (30) als wenigstens eine der nachfolgenden Folienverarbeitungsvorrichtungen ausgebildet ist:
- ein Wickelstretch-Automat,
- ein Haubenstretcher,
- eine Absackanlage, vorzugsweise Form-, Fill- & Seal-Absackanlage,
- eine Tiefziehanlage,
- eine Druckmaschine,
- ein Metallisierer,
- eine Folienanlage,
- ein Schrumpftunnel.

20. System (1) nach einem der Ansprüche 17 bis 19,
**dadurch gekennzeichnet,**
**dass** wenigstens zwei oder drei Weiterverarbeitungsvorrichtungen (30) vorgesehen sind, wobei die Weiterverarbeitungsprozessdaten (130) an jeder der Weiterverarbeitungsvorrichtungen (30) ermittelbar sind, wobei die jeweils ermittelten Weiterverarbeitungsprozessdaten (130) den Herstellungsprozessdaten (120), insbesondere anhand eines übergeordneten Identifikators, dauerhaft zuordenbar sind.

21. System (1) nach einem der Ansprüche 17 bis 20,
**dadurch gekennzeichnet,**
**dass** die Herstellungsvorrichtung (20) und/oder die Weiterverarbeitungsvorrichtung (30) mindestens eine Schnittstellenvorrichtung (12) zur Verbindung mit dem Übertragungssystem (50) aufweist, wobei die Schnittstellenvorrichtung (12) vorzugsweise eine Netzwerk-Schnittstelle und/oder eine Mobilfunkschnittstelle und/oder eine WLAN-Schnittstelle und/oder eine Bluetooth-Schnittstelle und/oder eine RFID-Schnittstelle umfasst.

22. System (1) nach einem der Ansprüche 17 bis 21,
**dadurch gekennzeichnet,**
**dass** die Herstellungsvorrichtung (20) und/oder die Weiterverarbeitungsvorrichtung (30) eine Einlesevorrichtung (15) umfasst, um einen Identifikator eines Produktes des Prozesses einzulesen, wobei die Einlesevorrichtung (15) vorzugsweise als ein Barcode-Scanner oder ein QR-Code-Scanner oder als ein RFID-Sensor oder als ein NFC-Sensor ausgeführt ist.

23. System (1) nach einem der Ansprüche 17 bis 22,
**dadurch gekennzeichnet,**
**dass** mindestens erste Herstellungsprozessdaten (120a) an einer ersten Herstellungsvorrichtung (20a) ermittelt werden, und mindestens zweite Herstellungsprozessdaten (120b) an einer zweiten Herstellungsvorrichtung (20b) ermittelt werden, wobei die Datenübertragung zur Bereitstellung der ersten und/oder zweiten Herstellungsprozessdaten (120a, 120b) zwischen der ersten Herstellungsvorrichtung (20a) und der zweiten Herstellungsvorrichtung (20b) durchgeführt wird, um insbesondere eine erste Korrelation (140a) zu ermitteln.

24. System (1) nach einem der Ansprüche 17 bis 23,
**dadurch gekennzeichnet,**
**dass** mindestens erste Weiterverarbeitungsprozessdaten (130a) an einer ersten Weiterverarbeitungsvorrichtung (30a) ermittelt werden, und mindestens zweite Weiterverarbeitungsprozessdaten (130b) an einer zweiten Weiterverarbeitungsvorrichtung (30b) ermittelt werden, wobei die Datenübertragung zur Bereitstellung der ersten und/oder zweiten Weiterverarbeitungsprozessdaten (130a, 130b) zwischen der ersten Weiterverarbeitungsvorrichtung (30a) und der zweiten Weiterverarbeitungsvorrichtung (30b) durchgeführt wird, um insbesondere eine zweite Korrelation (140b) zu ermitteln.

25. System (1) nach einem der Ansprüche 17 bis 24,
**dadurch gekennzeichnet,**
**dass** die Herstellungsvorrichtung (20) und/oder die Weiterverarbeitungsvorrichtung (30) jeweils eine Schnittstellenvorrichtung (12) mit einer SIM-Karte und/oder einer embeddedSIM aufweist.

26. System (1) nach einem der Ansprüche 17 bis 25,
**dadurch gekennzeichnet,**
**dass** das System (1) gemäß einem Verfahren (100) nach einem der Ansprüche 1 bis 16 betreibbar ist.

27. Verarbeitungsvorrichtung (60) zur Bewertung mindestens eines industriellen Prozesses zur Folienherstellung einer Folie, insbesondere einer Kunststofffolie, und/oder Weiterverarbeitung mit der Folie, umfassend:
- eine Schnittstelleneinheit (61) zur Verbindung mit einem Übertragungssystem (50), wobei durch eine Datenübertragung zumindest Herstellungsprozessdaten (120) und/oder Weiterverarbeitungsprozessdaten (130) über das Übertragungssystem (50) an die Verarbeitungsvorrichtung (60) übertragbar sind,
- eine elektronische Verarbeitungseinheit (62), durch welche eine Korrelation (140) zwischen den Herstellungsprozessdaten (120) und den Weiterverarbeitungsprozessdaten (130) ermittelbar ist,
- eine nicht-flüchtige Datenspeichereinheit (63) zur dauerhaften Speicherung der Korrelation (140),
wobei die Verarbeitungsvorrichtung (60) als eine zentrale Verarbeitungsvorrichtung (60) gemäß einem Verfahren (100) nach einem der Ansprüche 1 bis 16 und/oder in einem System (1) nach einem der Ansprüche 17 bis 26 betreibbar ist.

28. Verarbeitungsvorrichtung (60) nach Anspruch 27,
**dadurch gekennzeichnet,**
**dass** die Verarbeitungsvorrichtung (60), insbesondere die Datenspeichereinheit (63), einen vorrichtungsspezifischen Identifikator aufweist, sodass durch einen Vergleich des vorrichtungsspezifischen Identifikators mit einem Gegenidentifikator einer jeweiligen Vorrichtung (10) des Prozesses eine Authentifizierung der Vorrichtung (10) an der Verarbeitungsvorrichtung (60) durchführbar ist, insbesondere derart, dass nur bei einem positiven Authentifizierung eine Datenverbindung und/oder Bereitstellung der Korrelation (140) und/oder der Herstellungsprozessdaten (120) und/oder der Weiterverarbeitungsprozessdaten (130) erfolgt.

29. Computerprogrammprodukt (200) zur Bewertung mindestens eines industriellen Prozesses zur Folienherstellung einer Folie, insbesondere einer Kunststofffolie, und/oder Weiterverarbeitung mit der Folie, wobei das Computerprogrammprodukt (200) derart ausgestaltet ist, dass ein Verfahren (100) nach einem der Ansprüche 1 bis 16 betreibbar ist.

30. Computerprogrammprodukt (200) nach Anspruch 29,
**dadurch gekennzeichnet,**
**dass** das Computerprogrammprodukt (200) als ERP-System und/oder als internet- oder netzwerk-basierte Plattform und/oder als Firmware oder Steuerungssoftware für zumindest eine Vorrichtung (10) des Prozesses und/oder als Internetanwendung und/oder als eine Internetseite und/oder als eine über ein Netzwerk bedienbare Applikation ausgeführt ist.

## Claims

1. Method (100) for evaluating at least one industrial process for the film production of a film, in particular a plastic film, and/or further processing with the film, with
at least one production device (20) which is operated for the film production of the film, and
at least one further processing device (30) which is operated for the further processing with the film,
**characterized in that**
the following steps are carried out as part of the process:
- determining production process data (120) on the production device (20) during the film production,
- determining further processing process data (130) on the further processing device (30) during the further processing,
- carrying out a data transmission for the provision of the production process data (120) and/or of the further processing process data (130),
- determining a correlation (140) between the production process data (120) and the further processing process data (130), wherein at least one evaluation criterion (151) is assessed, so that an evaluation result (150) is established,
- providing the evaluation result (150) and/or the production process data (120) and/or the further processing process data (130),
wherein the at least one production device (20) is arranged independently of and spatially separately from the at least one further processing device (30), wherein in the data transmission, the production process data (120) are provided and/or permanently stored, in a product-related and/or order-related manner, for a respective product of the film production, wherein the product-related and/or order-related production process data (120) are transmitted via an internet connection to a central processing device (60).

2. Method (100) according to claim 1,
**characterized in that**
the following steps are proposed:
- selecting the production process data (120) relevant for the further processing, and/or the correlation (140), and/or the evaluation result (150), so that a selection (160) is established,
- providing the selection (160) for the further processing,
- adapting the further processing based on the selection (160).

3. Method (100) according to claim 1 or 2,
**characterized in that**
the data transmission occurs as an automated data exchange, wherein the data exchange is carried out in such a manner that the production process data (120) are at least partially transmitted to the further processing device (30), and in particular the further processing process data (130) are at least partially transmitted to the production device (20), preferably via a communication and/or internet connection.

4. Method (100) according to any one of the preceding claims,
**characterized in that**
the data transmission is carried out in such a manner that the production process data (120) and/or the further processing process data (130) are at least partially transmitted to a central processing device (60), preferably via a communication and/or internet connection, wherein, most preferably, the processing device (60) subsequently determines the correlation (140) and/or provides the transmitted production and/or further processing process data (120, 130) and/or the correlation (140), via the communication and/or internet connection, for the further evaluation, in particular via a website and/or an application operable via a network.

5. Method (100) according to any one of the preceding claims,
**characterized in that**
the data transmission is carried out using an identifier permanently assigned to the production process data (120) and/or further processing process data (130), in particular a machine-readable and/or QR code, which is preferably secured to a product of the process.

6. Method (100) according to any one of the preceding claims,
**characterized in that**
the data transmission occurs during the film production and/or further processing, in particular in the background as part of the process, preferably cyclically and/or in an event-triggered manner, between one or multiple further processing devices (30) and/or one or multiple production devices (20).

7. Method (100) according to any one of the preceding claims,
**characterized in that**
the process, in particular the film production and/or the further processing, comprises one or multiple production and/or further processing devices (20, 30), wherein, on the respective production and/or further processing devices (30), respectively assigned production and/or further processing process data (120, 130) are determined, wherein, as part of the process, one or multiple correlations (140) are determined for respectively different data of the respectively assigned production and/or further processing process data (120, 130), so that, in particular, the film production and/or further processing is controlled and/or adapted on the basis of the correlation, in particular as part of the process and/or in the background.

8. Method (100) according to any one of the preceding claims,
**characterized in that**
the evaluation result (150) has at least one of the subsequent items of information, which preferably is assigned to at least one device (10) of the process, and/or which is determined from the production process data (120) and/or the further processing process data (130):
- at least one performance metric of the at least one device (10) of the process, in particular the production device (20) and/or the further processing device (30),
- at least one indication about maintenance work,
- at least one processing speed,
- at least one mechanical and/or optical property of the film,
- at least one film formula for the film production and/or further processing,
- at least one range of variability of the forces and/or moments in the film production and/or further processing,
- indications and/or parameters and/or optimization proposals for the further processing and/or the film production,
- information about a process module located upstream of the film production and/or a raw material of the further processing and/or film production,
wherein the evaluation result (150) is at least partially provided to a film manufacturer and/or a film further processor, in particular via a network, preferably through an internet platform, wherein, in particular, the evaluation result (150) and/or the correlation (140) is used to evaluate the process module which is located upstream of the film production, so that, in particular, the raw material for the further processing is identified and/or evaluated.

9. Method (100) according to any one of the preceding claims,
**characterized in that**
the production process data (120) and/or the further processing process data (130) comprise at least one of the following items of information, which are preferably determined by at least one sensor (11) in a device (10) of the process:
- at least one indication about a relationship between stress and strain in the film,
- at least one indication about unwinding forces in the film,
- a number of tears in the further processing,
- a number and/or a type of a product of the further processing, or of a further process, in particular of a packed pallet,
- a measured force value, and/or a torque in the device (10),
- a temperature value which was detected in the device (10),
- a film formula for the film production and/or further processing,
- optical and/or acoustic information which was detected in particular in the device (10), errors or warnings, in particular error messages of the device (10) and/or data transmission errors,
- a number of further processing steps carried out with the film.

10. Method (100) according to any one of the preceding claims,
**characterized in that**
the further processing process data (130), through a detection of at least one of the following process parameters, are determined on the at least one further processing device (30), in particular by a sensor (11) of the respective further processing device (30),
- mechanical properties of the film, wherein the film is preferably configured as a stretch film, friction values of the film, wherein the film is preferably configured as an FFS film,
- deformation forces and/or curvature of the film, wherein the film is preferably configured as a deep-drawing film,
- parameters of a modulus of elasticity and/or defects of the film and/or winding parameters and/or unwinding forces and/or curvature, wherein the film is preferably configured as a printed film,
- unwinding forces of the film and/or curvature, wherein the film is preferably configured as a metallizing foil,
the sealing performance of the film used.

11. Method (100) according to any one of the preceding claims,
**characterized in that**
the evaluation criterion (151) has a film formula and/or a film-related default, preferably with pre-defined film properties, and/or at least one manufacturing parameter of the production device (20), and/or a default of the further processing device (30) for the film.

12. Method (100) according to any one of the preceding claims,
**characterized in that**
the correlation (140) is determined using a process model, wherein an adaptive and/or predictive evaluation of the production process data (120) and/or of the further processing process data (130) is preferably carried out.

13. Method (100) according to any one of the preceding claims,
**characterized in that**
in a selection of further production process data (121) which are determined for a film assigned to the further production process data (121), an estimated result of the further processing of the assigned film, and/or an estimated behavior of the assigned film in the further processing is predictively predicted depending on these further production process data (121) on the basis of at least one previously determined correlation (140).

14. Method (100) according to any one of the preceding claims,
**characterized in that**
the correlation (140) is determined **in that** an evaluation of the determined production process data (120) and of the determined further processing process data (130) is carried out
- by the further processing device (30), and/or
- by the production device (20), and/or
- by a central processing device (60), in particular by an ERP System (1) and/or by a network server and/or internet server.

15. Method (100) according to any one of the preceding claims,
**characterized in that**
the correlation (140) is determined **in that** a statistical assessment, preferably a regression analysis, is carried out, wherein the regression function is estimated based on the determined production process data (120) and/or the further processing process data (130).

16. Method (100) according to any one of the preceding claims,
**characterized in that**
the correlation (140) is determined **in that** a pattern recognition is carried out, preferably through a syntactic and/or statistical and/or structural pattern recognition, wherein preferably the subsequent steps are proposed:
- pre-processing the determined production process data (120) and/or further processing process data (130), in particular by filtering, preferably such that noise and/or outliers in the data are reduced,
- obtaining features and/or reducing features, in particular through a transformation and/or through an analysis of variance,
- classification of the features, in particular into classes, wherein the evaluation criterion (151) preferably defines the classes.

17. System (1) for evaluating at least one industrial process for the film production of a film, in particular a plastic film, and/or further processing with the film, comprising:
- at least one production device (20) for the film production of the film,
- at least one further processing device (30) for further processing with the film,
**characterized in that**
for a data transmission, a transmission system (50) is connected to the production device (20) and the further processing device (30), so that production process data (120) of the production device (20) and further processing process data (130) of the further processing device (30) can be provided and are assessable to determine a correlation (140), wherein, based on the correlation (140), an evaluation result (150) can be established, wherein the at least one production device (20) is arranged independently of and spatially separately from the at least one further processing device (30), wherein in the data transmission, the production process data (120) are provided and/or permanently stored, in a product-related and/or order-related manner, for a respective product of the film production, wherein the product-related and/or order-related production process data (120) are transmitted via an internet connection to a central processing device (60).

18. System (1) according to claim 17,
**characterized in that**
the production device (20) is formed as a film machine, and/or as a polymer reactor, and/or as a film extrusion machine, and/or as a blown film machine, and/or as a cast film machine.

19. System (1) according to claim 17 or 18,
**characterized in that**
the further processing device (30) is formed as at least one of the following film processing devices:
- a stretch-wrapping machine,
- a stretch hood,
- a bagging machine, preferably a form, fill & seal bagging machine,
- a deep-drawing machine,
- a printing machine,
- a metallizer, a film machine,
- a shrink tunnel.

20. System (1) according to any one of claims 17 to 19,
**characterized in that**
at least two or three further processing devices (30) are proposed, wherein the further processing process data (130) are determinable on each of the further processing devices (30), wherein the respectively determined further processing process data (130) are permanently assignable to the production process data (120), in particular based on a higher-order identifier.

21. System (1) according to any one of claims 17 to 20,
**characterized in that**
the production device (20) and/or the further processing device (30) comprises at least one interface device (12) for the connection with the transmission system (50), wherein the interface device (12) preferably comprises a network interface, and/or a mobile radio interface, and/or a WLAN interface, and/or a Bluetooth interface, and/or a RFID interface.

22. System (1) according to any one of claims 17 to 21,
**characterized in that**
the production device (20) and/or the further processing device (30) comprises a read-in device (15) in order to read in an identifier of a product of the process, wherein the read-in device (15) is preferably configured as a barcode scanner or a QR code scanner or as a RFID scanner or as a NFC sensor.

23. System (1) according to any one of claims 17 to 22,
**characterized in that**
at least first production process data (120a) are determined on a first production device (20a), and at least second production process data (120b) are determined on a second production device (20b), wherein the data transmission for providing the first and/or second production process data (120a, 120b) is carried out between the first production device (20a) and the second production device (20b), in particular to determine a first correlation (140a).

24. System (1) according to any one of claims 17 to 23,
**characterized in that**
at least first further processing process data (130a) are determined on a first further processing device (30a), and at least second further processing process data (130b) are determined on a second further processing device (30b), wherein the data transmission for providing the first and/or second further processing process data (130a, 130b) is carried out between the first further processing device (30a) and the second further processing device (30b), in particular to determine a second correlation (140b).

25. System (1) according to any one of claims 17 to 24,
**characterized in that**
the production device (20) and/or the further processing device (30) each comprise an interface device (12) with a SIM card and/or an embedded SIM.

26. System (1) according to any one of claims 17 to 25,
**characterized in that**
the system (1) is operable according to a method (100) according to any one of claims 1 to 16.

27. Processing device (60) for evaluating at least one industrial process for the film production of a film, in particular a plastic film, and/or further processing with the film, comprising:
- an interface unit (61) for connection with a transmission system (50), wherein, through a data transmission, at least production process data (120) and/or further processing process data (130) are transmittable, via the transmission system (50), to the processing device (60),
- an electronic processing unit (62) by which a correlation (140) between the production process data (120) and the further processing process data (130) is determinable,
- a non-volatile data storage unit (63) for permanent storage of the correlation (140),
wherein the processing device (60) is operable as a central processing device (60) according to a method (100) according to any one of claims 1 to 16 and/or in a system (1) according to any one of claims 17 to 26.

28. Processing device (60) according to claim 27,
**characterized in that**
the processing device (60), in particular the data storage unit (63), has a device-specific identifier, so that, through a comparison of the device-specific identifier with a counter-identifier of a respective device (10) of the process, an authentication of the device (10) can be carried out on the processing device (60), in particular in such a way that a data connection and/or provision of the correlation (140) and/or the production process data (120) and/or the further processing process data (130) only occurs if the authentication is positive.

29. Computer program product (200) for evaluating at least one industrial process for the film production of a film, in particular a plastic film, and/or further processing with the film, wherein the computer program product (200) is designed in such a manner that a method (100) is operable according to any one of claims 1 to 16.

30. Computer program product (200) according to claim 29,
**characterized in that**
the computer program product (200) is configured as an ERP system and/or as an internet-based or network-based platform and/or as firmware or controlling software for at least one device (10) of the process and/or as an internet application and/or as a website and/or as an application operable via a network.

## Revendications

1. Procédé (100) pour évaluer au moins un processus industriel de fabrication de film d'un film, en particulier d'un film plastique, et/ou de traitement ultérieur avec le film, avec
au moins un dispositif de fabrication (20) qui est exploité pour la fabrication de film du film, et
au moins un dispositif de traitement ultérieur (30) qui est exploité pour le traitement ultérieur avec le film,
**caractérisé en ce que**
les étapes suivantes sont mises en oeuvre au cours du processus :
- détermination de données de processus de fabrication (120) au niveau du dispositif de fabrication (20) lors de la fabrication de film,
- détermination de données de processus de traitement ultérieur (130) au niveau du dispositif de traitement ultérieur (30) lors du traitement ultérieur,
- mise en oeuvre d'une transmission de données pour la mise à disposition des données de processus de fabrication (120) et/ou des données de processus de traitement ultérieur (130),
- détermination d'une corrélation (140) entre les données de processus de fabrication (120) et les données de processus de traitement ultérieur (130), dans lequel au moins un critère d'évaluation (151) est évalué, de sorte qu'un résultat d'évaluation (150) soit déterminé,
- mise à disposition du résultat d'évaluation (150) et/ou des données de processus de fabrication (120) et/ou des données de processus de traitement ultérieur (130),
dans lequel l'au moins un dispositif de fabrication (20) est disposé de manière indépendante et séparé spatialement de l'au moins un dispositif de traitement ultérieur (30), dans lequel les données de processus de fabrication (120) sont mises à disposition et/ou enregistrées durablement lors de la transmission de données en fonction du produit et/ou en fonction de la commande pour un produit respectif de la fabrication de film, dans lequel les données de processus de fabrication (120) en fonction du produit et/ou en fonction de la commande sont transmises à un dispositif de traitement central (60) par l'intermédiaire d'une connexion Internet.

2. Procédé (100) selon la revendication 1,
**caractérisé en ce que**
les étapes suivantes sont prévues :
- sélection des données de processus de fabrication (120) pertinentes pour le traitement ultérieur et/ou de la corrélation (140) et/ou du résultat d'évaluation (150), de sorte qu'une sélection (160) soit déterminée,
- préparation de la sélection (160) pour le traitement ultérieur,
- adaptation du traitement ultérieur à l'aide de la sélection (160).

3. Procédé (100) selon la revendication 1 ou 2,
**caractérisé en ce que**
la transmission de données s'effectue en tant qu'échange de données automatisé, dans lequel l'échange de données est mis en oeuvre de sorte que les données de processus de fabrication (120) soient transmises au moins partiellement au dispositif de traitement ultérieur (30), et en particulier les données de processus de traitement ultérieur (130) sont transmises au moins partiellement au dispositif de fabrication (20), de préférence par l'intermédiaire d'une connexion de communication et/ou Internet.

4. Procédé (100) selon l'une quelconque des revendications précédentes,
**caractérisé en ce que**
la transmission de données est mise en oeuvre de sorte que les données de processus de fabrication (120) et/ou les données de processus de traitement ultérieur (130) soient transmises au moins partiellement à un dispositif de traitement central (60), de préférence par l'intermédiaire d'une connexion de communication et/ou Internet, dans lequel le dispositif de traitement (60) détermine ensuite le plus préférentiellement la corrélation (140) et/ou met à disposition les données de processus de fabrication et/ou de traitement ultérieur (120, 130) transmises et/ou la corrélation (140) par l'intermédiaire de la connexion de communication et/ou Internet pour une évaluation ultérieure, en particulier par l'intermédiaire d'un site Internet et/ou d'une application utilisable par l'intermédiaire d'un réseau.

5. Procédé (100) selon l'une quelconque des revendications précédentes,
**caractérisé en ce que**
la transmission de données s'effectue à l'aide d'un identifiant associé durablement aux données de processus de fabrication (120) et/ou aux données de processus de traitement ultérieur (130), en particulier un code lisible par machine et/ou QR qui est de préférence fixé à un produit du processus.

6. Procédé (100) selon l'une quelconque des revendications précédentes,
**caractérisé en ce que**
la transmission de données s'effectue pendant la fabrication de film et/ou le traitement ultérieur, en particulier en arrière-plan au cours du processus, de préférence de manière cyclique et/ou déclenchée par un événement, entre un ou plusieurs dispositifs de traitement ultérieur (30) et/ou un ou plusieurs dispositifs de fabrication (20).

7. Procédé (100) selon l'une quelconque des revendications précédentes,
**caractérisé en ce que**
le processus, en particulier la fabrication de film et/ou le traitement ultérieur, comprend un ou plusieurs dispositifs de fabrication et/ou de traitement ultérieur (20, 30), dans lequel des données de processus de fabrication et/ou de traitement ultérieur (120, 130) respectivement associées sont déterminées au niveau des dispositifs de fabrication et/ou de traitement ultérieur respectifs (20, 30), dans lequel une ou plusieurs corrélations (140) sont déterminées au cours du processus pour des données de processus de fabrication et/ou de traitement ultérieur (120, 130) respectivement différentes des données de processus de fabrication et/ou de traitement ultérieur respectivement associées, de sorte en particulier que la fabrication de film et/ou le traitement ultérieur soient commandés et/ou adaptés à l'aide de la corrélation, en particulier au cours du processus et/ou en arrière-plan.

8. Procédé (100) selon l'une quelconque des revendications précédentes,
**caractérisé en ce que**
le résultat d'évaluation (150) présente au moins une des informations suivantes qui sont de préférence associées à au moins un dispositif (10) du processus et/ou sont déterminées à partir des données de processus de fabrication (120) et/ou des données du processus de traitement ultérieur (130) :
- au moins un indicateur de performance de l'au moins un dispositif (10) du processus, en particulier du dispositif de fabrication (20) et/ou du dispositif de traitement ultérieur (30),
- au moins une indication à propos de travaux d'entretien,
- au moins une vitesse de traitement,
- au moins une propriété mécanique et/ou optique du film,
- au moins une recette de film pour la fabrication de film et/ou le traitement ultérieur,
- au moins une marge de fluctuation des forces et/ou des moments lors de la fabrication de film et/ou du traitement ultérieur,
- des indications et/ou paramètres et/ou propositions d'optimisation pour le traitement ultérieur et/ou la fabrication de film,
- des informations sur un module de processus situé en amont de la fabrication de film et/ou sur une matière première du traitement ultérieur et/ou de la fabrication de film,
dans lequel le résultat d'évaluation (150) est mis à disposition au moins partiellement d'un fabricant de film et/ou d'un opérateur de traitement ultérieur de film, en particulier par l'intermédiaire d'un réseau, de préférence par une plateforme Internet, dans lequel le module de processus, qui est situé en amont de la fabrication de film, est évalué à l'aide en particulier du résultat d'évaluation (150) et/ou de la corrélation (140), de sorte en particulier que la matière première pour le traitement ultérieur soit identifiée et/ou évaluée.

9. Procédé (100) selon l'une quelconque des revendications précédentes,
**caractérisé en ce que**
les données de procédé de fabrication (120) et/ou les données de processus de traitement ultérieur (130) comprennent au moins une des informations suivantes qui sont de préférence déterminées par au moins un capteur (11) dans un dispositif (10) du processus :
- au moins une indication à propos d'une relation entre la tension et l'allongement du film,
- au moins une indication à propos de forces de déroulement sur le film,
- un nombre d'arrachages lors du traitement ultérieur,
- un nombre et/ou un type d'un produit du traitement ultérieur ou d'un processus supplémentaire, en particulier une palette emballée,
- une valeur de force mesurée et/ou un couple sur le dispositif (10),
- une valeur de température qui a été détectée sur le dispositif (10),
- une recette de film pour la fabrication de film et/ou le traitement ultérieur,
- des informations optiques et/ou acoustiques qui ont été détectées en particulier sur le dispositif (10), des erreurs ou des avertissements, en particulier des messages d'erreur du dispositif (10) et/ou des erreurs de transmission de données,
- un nombre d'étapes de traitement ultérieur effectuées avec le film.

10. Procédé (100) selon l'une quelconque des revendications précédentes,
**caractérisé en ce que**
les données de processus de traitement ultérieur (130) sont déterminées par une détection d'au moins un des paramètres de processus suivants au niveau de l'au moins un dispositif de traitement ultérieur (30), en particulier par un capteur (11) du dispositif de traitement ultérieur (30) respectif :
- propriétés mécaniques du film, dans lequel le film est de préférence réalisé en tant que film étirable, valeurs de frottement du film, dans lequel le film est de préférence réalisé en tant que film FFS,
- forces de déformation et/ou course d'arc du film, dans lequel le film est de préférence réalisé en tant que film thermoformé,
- paramètres d'un module E et/ou défauts du film et/ou paramètres d'enroulement et/ou forces de déroulement et/ou course d'arc, dans lequel le film est de préférence réalisé en tant que film imprimé,
- forces de déroulement du film et/ou course d'arc, dans lequel le film est de préférence réalisé en tant que film métallisé,
- le comportement de scellage du film utilisé.

11. Procédé (100) selon l'une quelconque des revendications précédentes,
**caractérisé en ce que**
le critère d'évaluation (151) présente une recette de film et/ou un paramètre par défaut du film, de préférence avec des propriétés de film prédéfinies, et/ou au moins un paramètre de finition du dispositif de fabrication (20) et/ou un paramètre par défaut du dispositif de traitement ultérieur (30) pour le film.

12. Procédé (100) selon l'une quelconque des revendications précédentes,
**caractérisé en ce que**
la corrélation (140) est déterminée à l'aide d'un modèle de processus, dans lequel de préférence une évaluation adaptative et/ou prédictive des données de processus de fabrication (120) et/ou des données de processus de traitement ultérieur (130) est mise en oeuvre.

13. Procédé (100) selon l'une quelconque des revendications précédentes,
**caractérisé en ce que**
lors d'une sélection de données de processus de fabrication supplémentaires (121), qui sont déterminées pour un film associé aux données de processus de fabrication supplémentaires (121), un résultat prévisible du traitement ultérieur du film associé et/ou un comportement prévisible du film associé lors du traitement ultérieur est prédit de manière prédictive en fonction de ces données de processus de fabrication supplémentaires (121) à l'aide d'au moins une corrélation (140) déterminée auparavant,

14. Procédé (100) selon l'une quelconque des revendications précédentes,
**caractérisé en ce que**
la corrélation (140) est déterminée **en ce qu'**une évaluation des données de processus de fabrication déterminées (120) et des données de processus de traitement ultérieur déterminées (130) est effectuée
- par le dispositif de traitement ultérieur (30), et/ou
- par le dispositif de fabrication (20), et/ou
- par un dispositif de traitement central (60), en particulier par un système ERP (1) et/ou par un serveur réseau et/ou Internet.

15. Procédé (100) selon l'une quelconque des revendications précédentes,
**caractérisé en ce que**
la corrélation (140) est déterminée **en ce qu'**une évaluation statistique, de préférence une analyse de régression, est effectuée, dans lequel la fonction de régression est estimée à l'aide des données de processus de fabrication (120) et/ou des données de processus de traitement ultérieur (130) déterminées.

16. Procédé (100) selon l'une quelconque des revendications précédentes,
**caractérisé en ce que**
la corrélation (140) est déterminée **en ce qu'**une reconnaissance de motif est effectuée, de préférence par une reconnaissance de motif syntaxique et/ou statistique et/ou structurelle, dans lequel les étapes suivantes sont de préférence prévues :
- prétraitement des données de processus de fabrication (120) et/ou des données de processus de traitement ultérieur (130) déterminées, en particulier par filtrage, de préférence de sorte qu'un bruit et/ou des valeurs aberrantes des données soient réduits,
- gain de caractéristiques et/ou réduction de caractéristiques, en particulier par une transformation et/ou par une analyse de variance,
- classification des caractéristiques, en particulier en classes, dans lequel de préférence le critère d'évaluation (151) définit les classes.

17. Système (1) pour évaluer au moins un processus industriel de fabrication de film d'un film, en particulier d'un film plastique, et/ou de traitement ultérieur avec le film, comprenant :
- au moins un dispositif de fabrication (20) pour la fabrication de film du film,
- au moins un dispositif de traitement ultérieur (30) pour le traitement ultérieur avec le film,
**caractérisé en ce que**
pour une transmission de données, un système de transmission (50) est connecté au dispositif de fabrication (20) et au dispositif de traitement ultérieur (30), de sorte que des données de processus de fabrication (120) du dispositif de fabrication (20) et des données de processus de traitement ultérieur (130) du dispositif de traitement ultérieur (30) puissent être mises à disposition et évaluées pour déterminer une corrélation (140), dans lequel un résultat d'évaluation (150) peut être déterminé à l'aide de la corrélation (140), dans lequel l'au moins un dispositif de fabrication (20) est disposé de manière indépendante et séparée spatialement de l'au moins un dispositif de traitement ultérieur (30), dans lequel les données de processus de fabrication (120) sont mises à disposition et/ou enregistrées durablement lors de la transmission de données en fonction du produit et/ou en fonction de la commande pour un produit respectif de la fabrication de film, dans lequel les données de processus de fabrication (120) en fonction du produit et/ou en fonction de la commande sont transmises à un dispositif de traitement central (60) par l'intermédiaire d'une connexion Internet.

18. Système (1) selon la revendication 17,
**caractérisé en ce que**
le dispositif de fabrication (20) est conçu en tant qu'installation de film et/ou en tant que réacteur de polymère et/ou en tant qu'installation d'extrusion de film et/ou en tant qu'installation de film soufflé et/ou en tant qu'installation de film coulé.

19. Système (1) selon la revendication 17 ou 18,
**caractérisé en ce que**
le dispositif de traitement ultérieur (30) est conçu au moins en tant qu'un des dispositifs de traitement de film suivants :
- un automate d'étirage de bobine,
- une housseuse,
- une installation d'ensachage, de préférence une installation d'ensachage Form, Fill & Seal,
- une installation de thermoformage,
- une machine d'impression,
- un métalliseur, une installation de film,
- un tunnel de rétraction.

20. Système (1) selon l'une quelconque des revendications 17 à 19,
**caractérisé en ce que**
au moins deux ou trois dispositifs de traitement ultérieur (30) sont prévus, dans lequel les données de processus de traitement ultérieur (130) peuvent être déterminées au niveau de chacun des dispositifs de traitement ultérieur (30), dans lequel les données de processus de traitement ultérieur (130) respectivement déterminées peuvent être associées durablement aux données de processus de fabrication (120), en particulier à l'aide d'un identificateur de niveau supérieur.

21. Système (1) selon l'une quelconque des revendications 17 à 20,
**caractérisé en ce que**
le dispositif de fabrication (20) et/ou le dispositif de traitement ultérieur (30) présente au moins un dispositif d'interface (12) pour la connexion avec le système de transmission (50), dans lequel le dispositif d'interface (12) comprend de préférence une interface réseau et/ou une interface de téléphonie mobile et/ou une interface WLAN et/ou une interface Bluetooth et/ou une interface RFID.

22. Système (1) selon l'une quelconque des revendications 17 à 21,
**caractérisé en ce que**
le dispositif de fabrication (20) et/ou le dispositif de traitement ultérieur (30) comprend un dispositif de lecture (15) pour lire un identifiant d'un produit du processus, dans lequel le dispositif de lecture (15) est de préférence réalisé en tant que lecteur de code-barres ou lecteur de code QR ou en tant que capteur RFID ou en tant que capteur N FC.

23. Système (1) selon l'une quelconque des revendications 17 à 22,
**caractérisé en ce que**
au moins de premières données de processus de fabrication (120a) sont déterminées au niveau d'un premier dispositif de fabrication (20a), et au moins de secondes données de processus de fabrication (120b) sont déterminées au niveau d'un second dispositif de fabrication (20b), dans lequel la transmission de données pour la mise à disposition des premières et/ou secondes données de processus de fabrication (120a, 120b) est effectuée entre le premier dispositif de fabrication (20a) et le second dispositif de fabrication (20b) pour déterminer en particulier une première corrélation (140a).

24. Système (1) selon l'une quelconque des revendications 17 à 23,
**caractérisé en ce que**
au moins de premières données de processus de traitement ultérieur (130a) sont déterminées au niveau d'un premier dispositif de traitement ultérieur (30a), et au moins de secondes données de processus de traitement ultérieur (130b) sont déterminées au niveau d'un second dispositif de traitement ultérieur (30b), dans lequel la transmission de données pour la mise à disposition des premières et/ou secondes données de processus de traitement ultérieur (130a, 130b) est effectuée entre le premier dispositif de traitement ultérieur (30a) et le second dispositif de traitement ultérieur (30b) pour déterminer en particulier une seconde corrélation (140b).

25. Système (1) selon l'une quelconque des revendications 17 à 24,
**caractérisé en ce que**
le dispositif de fabrication (20) et/ou le dispositif de traitement ultérieur (30) présente respectivement un dispositif d'interface (12) avec une carte SIM et/ou une carte SIM embarquée.

26. Système (1) selon l'une quelconque des revendications 17 à 25,
**caractérisé en ce que**
le système (1) peut être exploité conformément à un procédé (100) selon l'une quelconque des revendications 1 à 16.

27. Dispositif de traitement (60) pour évaluer au moins un processus industriel de fabrication de film d'un film, en particulier d'un film plastique, et/ou de traitement ultérieur avec le film, comprenant :
- une unité d'interface (61) pour la connexion à un système de transmission (50), dans lequel au moins des données de processus de fabrication (120) et/ou des données de processus de traitement ultérieur (130) peuvent être transmises au dispositif de traitement (60) par une transmission de données par l'intermédiaire du système de transmission (50),
- une unité de traitement électronique (62), par l'intermédiaire de laquelle une corrélation (140) entre les données de processus de fabrication (120) et les données de processus de traitement ultérieur (130) peut être déterminée,
- une unité d'enregistrement de données non volatile (63) pour l'enregistrement durable de la corrélation (140),
dans lequel le dispositif de traitement (60) peut être exploité en tant que dispositif de traitement central (60) conformément à un procédé (100) selon l'une quelconque des revendications 1 à 16 et/ou dans un système (1) selon l'une quelconque des revendications 17 à 26.

28. Dispositif de traitement (60) selon la revendication 27,
**caractérisé en ce que**
le dispositif de traitement (60), en particulier l'unité d'enregistrement de données (63), présente un identifiant spécifique au dispositif de sorte que, par une comparaison de l'identifiant spécifique au dispositif avec un contre-identifiant d'un dispositif respectif (10) du processus, une authentification du dispositif (10) peut être effectuée au niveau du dispositif de traitement (60), en particulier de sorte qu'une connexion de données et/ou une mise à disposition de la corrélation (140) et/ou des données de processus de fabrication (120) et/ou des données de processus de traitement ultérieur (130) soit effectuée uniquement en cas d'authentification positive.

29. Produit de programme informatique (200) pour évaluer au moins un processus industriel de fabrication de film d'un film, en particulier d'un film plastique, et/ou de traitement ultérieur avec le film, dans lequel le produit de programme informatique (200) est conçu de sorte qu'un procédé (100) puisse être exploité selon l'une quelconque des revendications 1 à 16.

30. Produit de programme informatique (200) selon la revendication 29,
**caractérisé en ce que**
le produit de programme informatique (200) est conçu en tant que système ERP et/ou en tant que plateforme basée sur Internet ou sur un réseau et/ou en tant que micrologiciel ou logiciel de commande pour au moins un dispositif (10) du processus et/ou en tant qu'application Internet et/ou en tant que site Internet et/ou en tant qu'application pouvant être utilisée par l'intermédiaire d'un réseau.
